(19) Europäisches Patentamt / European Patent Office / Office européen des brevets

(11) EP 2 970 696 B1

(12) **EUROPÄISCHE PATENTSCHRIFT**

(45) Veröffentlichungstag und Bekanntmachung des Hinweises auf die Patenterteilung:
**11.01.2017 Patentblatt 2017/02**

(21) Anmeldenummer: **14709623.4**

(22) Anmeldetag: **11.03.2014**

(51) Int Cl.:
***C09D 5/04*** *(2006.01)*

(86) Internationale Anmeldenummer:
**PCT/EP2014/054644**

(87) Internationale Veröffentlichungsnummer:
**WO 2014/139982 (18.09.2014 Gazette 2014/38)**

(54) **THIXOTROPIE-VERSTÄRKENDES ADDITIV UND DIESES ENTHALTENDE ZUSAMMENSETZUNG**

THIXOTROPY-INCREASING ADDITIVE AND COMPOSITION CONTAINING THE SAME

ADDITIF RENFORÇANT LA THIXOTROPIE ET COMPOSITION LE CONTENANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.03.2013 EP 13158671**

(43) Veröffentlichungstag der Anmeldung:
**20.01.2016 Patentblatt 2016/03**

(73) Patentinhaber: **BYK-Chemie GmbH**
**46438 Wesel (DE)**

(72) Erfinder:
- **BIECKER, Christian**
  **46569 Hünxe (DE)**
- **KOCKOTH, Sascha**
  **70376 Stuttgart (DE)**
- **PIESTERT, Frederik**
  **46483 Wesel (DE)**
- **PRITSCHINS, Wolfgang**
  **46487 Wesel (DE)**
- **OMEIS, Jürgen**
  **46286 Dorsten-Lembeck (DE)**
- **HOVERATH, Eva**
  **46487 Wesel (DE)**
- **ORLOWSKI, Angelika**
  **46487 Wesel (DE)**

(74) Vertreter: **Leifert & Steffan**
**Patentanwälte**
**Postfach 10 40 09**
**40031 Düsseldorf (DE)**

(56) Entgegenhaltungen:
**WO-A1-99/23177**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft eine Verwendung wenigstens eines Kondensationsprodukts (A) in Form der freien Verbindung oder in Form eines Salzes wenigstens einer Säure als Thixotropie-verstärkendes Additiv, welches erhältlich ist durch Umsetzung wenigstens einer polymerisierten Fettsäure oder wenigstens eines Umsetzungsprodukts (U) von wenigstens zwei polymerisierten Fettsäuren und wenigstens einem wenigstens zwei primäre Amino-Gruppen aufweisenden Polyamin als Komponente (a1) mit wenigstens einem zur Ausbildung wenigstens einer Imidazolin- und/oder Tetrahydropyrimidin-Einheit befähigten Polyalkylenpolyamin, welches wenigstens zwei primäre Amino-Gruppen oder wenigstens eine primäre und wenigstens eine sekundäre Amino-Gruppe aufweist, eine Zusammensetzung enthaltend wenigstens ein solches Kondensationsprodukt (A) und wenigstens ein Thixotropiermittel (B) sowie eine Verwendung dieser Zusammensetzung, die zudem wenigstens ein Bindemittel (C) umfasst, als Klebstoff, Dichtstoff, Lack, Beschichtungsmittel, Klebeharz, Gießharz, Kunstmarmor, Fußbodenbelag, Polymerbeton oder Faserverbundmaterial.

Insbesondere auf dem Gebiet der Faserverbundstoffe, Klebstoffe, Dichtstoffe, Lacke und Beschichtungsmittel ist es notwendig die rheologischen Eigenschaften solcher Zusammensetzungen maßzuschneidern. Die Einstellung der erwünschten Konsistenz solcher Zusammensetzungen erfolgt dabei üblicherweise durch geeignete Auswahl von Bindemitteln, Lösemitteln und den Gehalt an Pigmenten und/oder Füllstoffen. In vielen Fällen reicht jedoch eine Einstellung der gewünschten Konsistenz mithilfe der vorgenannten Bestandteile nicht aus. In solchen Fällen bedarf es des Zusatzes sogenannter rheologischer Additive. Deren Wirkung kann eine Viskositätsverringerung zwecks besserer Verarbeitbarkeit sein oder eine Viskositätserhöhung, wobei letztere auch als Verdickung bezeichnet wird. Eine solche Viskositätserhöhung kann beispielsweise durch den Zusatz von Thixotropiermitteln als Verdicker erzielt werden.

Für die genannten Einsatzzwecke wird eine Vielzahl verschiedener organischer oder anorganischer Verdicker beschrieben: In wässrigen Systemen werden dabei vornehmlich Celluloseether, Stärke, natürliche Hydrokolloide, synthetische Biopolymere, Polyacrylatverdicker, assoziative Verdickungsmittel auf Basis hydrophob modifizierter Polymere wie Polyether, Etherurethane, Polyacrylamide und alkalisch aktivierter Acrylatemulsionen oder wasserquellbare anorganische Verdicker eingesetzt. Typische Verdicker für nicht-wässrige Systeme sind neben organischen Verdickern wie Wachsen und thixotropen Harzen, anorganische Verdicker wie beispielsweise Magnesiumoxid und Magnesiumhydroxid, welche vorwiegend in ungesättigten Polyesterharz-Systemen eingesetzt werden, oder amorphe Kieselsäuren und Schichtsilikate wie organisch modifiziertes Bentonit. Diese Verdicker entfalten in den zu verdickenden wässrigen und insbesondere nicht-wässrigen Systemen direkt nach Einarbeitung beziehungsweise Vermischung ihre viskositätserhöhende Wirkung.

Wird beispielsweise amorphe Kieselsäure als Thixotropiermittel in einer Flüssigkeit oder Dispersion eingesetzt, um innerhalb dieser eine verdickende Wirkung zu erzielen, so können sich zwischen den einzelnen Kieselsäuremolekülen Wasserstoffbrückenbindungen ausbilden. Es entsteht ein dreidimensionales Netzwerk, wodurch die Fließfähigkeit der Flüssigkeit oder Dispersion verringert werden kann. Durch eine Einwirkung von Scherkräften kann ein solches Netzwerk wieder zerstört werden, was wiederum zu einer Viskositätsverringerung der Flüssigkeit bzw. Dispersion führt. Nach einer gewissen Regenerationszeit steigt die Viskosität des Systems wieder an, da die in der Flüssigkeit oder Dispersion enthaltenen Kieselsäuremoleküle erneut ein dreidimensionales Netzwerk ausbilden. Dieser zeitabhängige und reversible Vorgang wird im Allgemeinen als Thixotropie bezeichnet.

Die Thixotropierwirkung von Thixotropiermitteln wie beispielsweise amorpher Kieselsäure wird zum Beispiel dazu genutzt, um das Absacken oder Ablaufen von Harzlösungen, Dichtungsmassen, Klebern, Anstrichstoffen, Spachtelmassen und Gießharzen zu verhindern, aber auch, um beispielsweise Mineralölen eine viskosere Konsistenz zu verleihen.

In manchen Systemen neigt das eingesetzte Thixotropiermittel wie beispielsweise amorphe Kieselsäure dazu, sich abzusetzen. Dies ist besonders kritisch, wenn solche Thixotropiermittel-haltigen Systeme über einen längeren Zeitraum in Behältern transportiert werden und so mechanischen Belastungen wie auftretenden Scherkräften ausgesetzt sind. Üblicherweise wird versucht, diesem unerwünschten Verhalten des Thixotropiermittels durch Erhöhung der eingesetzten Menge desselben entgegenzuwirken, um so die Aufrechterhaltung der thixotropen Wirkung, wie beispielsweise dem Erhalt eines durch Wasserstoffbrückenbindungen zwischen Kieselsäuremolekülen ausgebildeten dreidimensionales Netzwerks, auch bei zumindest geringer mechanischer Belastung zu gewährleisten. Eine solche Erhöhung der eingesetzten Menge des Thixotropiermittels in dem jeweiligen System hat jedoch oftmals den Nachteil, dass eine zu hohe Konzentration zu Störungen in bestimmten technischen Anwendungen der Systeme führen kann, die sich beispielsweise in unerwünschten Mattierungseffekten Im Fall von glänzend eingestellten Beschichtungsformulierungen oder aber in einer Verringerung der Festigkeit in Harz-Systemen führen kann. Zudem ist eine solche Erhöhung der eingesetzten Menge des Thixotropiermittels in solchen Systemen besonders nachteilig bzw. nicht möglich, die von vornerein ein relativ hohe Viskosität aufweisen. Die einsetzbare Menge an Thixotropiermittel ist daher insbesondere in solchen Systemen stark begrenzt.

In einigen Thixotropiermittel-haltigen Systemen wie beispielsweise einem System, welches neben dem Thixotropiermittel wie amorpher Kieselsäure zudem ein Epoxidharz-basiertes Bindemittel enthält und dem eine Härter-Komponente wie beispielsweise ein Amin zugemischt wird, kann es zu einer (konkurrierenden) Ausbildung von Wasserstoffbrückenbindungen zwischen dem Amin und dem Thixotropiermittel wie amorpher Kieselsäure, d.h. zu einer Adsorption der zugesetzten Härter-Komponente an das Thixotropiermittel kommen. Dadurch kann das zuvor durch Wasserstoffbrückenbindungen zwischen den einzelnen Kieselsäuremolekülen ausgebildete dreidimensionale Netzwerk zumindest teilweise zerstört und damit insbesondere die Thixotropierwirkung des eingesetzten Thixotropiermittels signifikant geschwächt werden.

Ein Ansatz, der vorsieht, eine solche zumindest teilweise Zerstörung derartiger Netzwerke in Thixotropiermittelhaltigen Systemen zu verhindern bzw. die Thixotropierwirkung des eingesetzten Thixotropiermittels zu steigern, besteht in einer Verstärkung bzw. Stabilisierung des Netzwerks in den Systemen durch Zugabe eines Thixotropie-verstärkenden Additivs.

So sind beispielsweise aus DE 37 06 860 A1 Thixotropie-verstärkende Additive auf Basis von Polyhydroxycarbonsäureamiden bekannt, die in Kombination mit pyrogener Kieselsäure in lösemittelhaltigen Systemen die Einarbeitung der Kieselsäure verbessern und das thixotrope Verhalten derselben erhöhen und stabilisieren. Diese Polyhydroxycarbonsäureamide weisen jedoch einige Nachteile in manchen Bindemittel-Zusammensetzungen auf, wie beispielsweise in Epoxidharzbasierten Bindemitteln. Nachteilig an den aus DE 37 06 860 A1 bekannten Thixotropie-verstärkende Additiven ist jedoch, dass deren Thixotropie-verstärkende Wirkung insbesondere in solchen Zusammensetzungen nicht ausreichend ist, die in hohen Schichtdicken appliziert werden, und dass - sofern Amine als Härter-Komponente in diesen Zusammensetzungen eingesetzt werden - die Thixotropie-verstärkende Wirkung dieser Additive signifikant geschwächt werden kann.

Aus WO 99/23177 A1 sind Reaktionsprodukte eines Alkyd-Harzes und eines Poly(ester)amids als Thixotropiermittel bekannt. Das Poly(ester)amid kann dabei durch Reaktion einer Polycarbonsäure mit einem Amin erhalten werden. Das Amin ist dabei zwingend ein aromatisches Amin, d.h. ein Amin, welches nicht zur Ausbildung von Imidazolin- und/oder Tetrahydropyrimidin-Einheiten befähigt ist. WO 99/23177 A1 enthält weder einen Hinweis auf einen Einsatz des Poly(ester)amids per se als Thixotropiermittel noch auf eine Verwendung dieses Polymers oder des Reaktionsproduktes als Thixotropie-verstärkendes Additiv. Eine thixotrope Wirkung ist gemäß WO 99/23177 A1 ausschließlich durch das Reaktionsprodukt des Alkyd-Harzes und des Poly(ester)amids gegeben.

Zudem ist die Zugabe eines hochmolekularen Polyethylenimins als Thixotropie-verstärkendes Additiv mit einem Molekulargewicht von etwa 750 000 g/mol in EP 0 835 910 A1 beschrieben. Die Einsetzbarkeit dieses Thixotropieverstärkenden Additivs ist jedoch auf Epoxidharz-basierte Bindemittel-Systeme beschränkt. Nachteilig an den aus EP 0 835 910 A1 bekannten hochmolekularen Polyethyleniminen ist jedoch, dass diese aufgrund ihrer hohen Polarität eine hohe Viskosität aufweisen und nur schwer zu verarbeiten sind bzw. mit vielen üblicherweise eingesetzten Bindemitteln nicht oder nur eingeschränkt verträglich sind. Ferner werden die aus EP 0 835 910 A1 bekannten hochmolekularen Polyethylenimine üblicherweise in Form einer wässrigen Zusammensetzung eingesetzt, was für die meisten Lösemittelhaltigen Zusammensetzungen jedoch nachteilig ist, da Wasser katalytisch wirken und kann und es insbesondere im Fall von Polyurethan-basierten Bindemitteln zu einer unerwünschten Gasbildung kommen kann. Zudem zeigen die aus EP 0 835 910 A1 bekannten hochmolekularen Polyethylenimine insbesondere in Polyester-basierten Bindemitteln eine nur geringe Lagerstabilität.

Es besteht jedoch ein Bedarf an Thixotropie-verstärkenden Additiven, insbesondere in Kombination mit einem Thixotropiermittel wie beispielsweise amorpher und insbesondere pyrogener Kieselsäure, die die vorstehenden Nachteile der üblicherweise eingesetzten Thixotropie-verstärkender Additive nicht aufweisen.

Eine Aufgabe der vorliegenden Erfindung ist es daher, ein Thixotropie-verstärkendes Additiv zur Verfügung zu stellen, welches Vorteile gegenüber den üblicherweise eingesetzten Thixotropie-verstärkenden Additiven aufweist. Insbesondere ist es eine Aufgabe der vorliegenden Erfindung, Zusammensetzungen enthaltend wenigstens ein solches Thixotropie-verstärkendes Additiv sowie wenigstens ein Thixotropiermittel zur Verfügung zu stellen, die Vorteile gegenüber den üblicherweise eingesetzten Zusammensetzungen aufweisen, insbesondere im Hinblick auf die Thixotropierwirkung von solchen Zusammensetzungen, die als Klebstoffe, Dichtstoffe, Lacke oder Beschichtungsmittel, insbesondere als Klebstoffe, eingesetzt werden. Insbesondere ist es eine Aufgabe der vorliegenden Erfindung, eine solche Zusammensetzung zur Verfügung zu stellen, die sich insbesondere aufgrund des in ihr enthaltenen Thixotropie-verstärkenden Additivs sowie des in ihr enthaltenen Thixotropiermittels dazu eignet, die mechanischen Eigenschaften der Zusammensetzungen im ungehärteten aber auch im gehärteten Zustand zu verbessern, insbesondere deren Stabilität zu erhöhen.

Diese Aufgabe wird gelöst durch eine Verwendung wenigstens eines Kondensationsprodukts (A) in Form der freien Verbindung oder in Form eines Salzes wenigstens einer Säure, welches erhältlich ist durch Umsetzung

(a1) wenigstens einer polymerisierten Fettsäure oder wenigstens eines Umsetzungsprodukts (U) von wenigstens zwei polymerisierten Fettsäuren und wenigstens einem wenigstens zwei primäre Amino-Gruppen aufweisenden Polyamin,

mit

(a2) wenigstens einem zur Ausbildung wenigstens einer Imidazolin-und/oder Tetrahydropyrimidin-Einheit befähigten Polyalkylenpolyamin, welches wenigstens zwei primäre Amino-Gruppen oder wenigstens eine primäre und wenigstens eine sekundäre Amino-Gruppe aufweist,

als Thixotropie-verstärkendes Additiv.

Kondensationsprodukte aus polymerisierten Fettsäuren und Polyaminen und ihre Verwendung als Härter-Komponenten bzw. als Bestandteil von PVC-Plastisolen sind beispielsweise aus DE 26 54 871 A1, EP 0 084 111 A1, EP 0 098 372 A1, EP 0 003 246 A1, EP 1 865 013 A1 und US 2012/0237774 A1 bekannt, nicht jedoch eine Verwendung der darin beschriebenen Kondensationsprodukte als Thixotropie-verstärkende Additive.

Ein erster Gegenstand der vorliegenden Erfindung ist daher eine Verwendung wenigstens eines vorstehend genannten Kondensationsprodukts (A) als Thixotropie-verstärkendes Additiv. Die Verwendung des wenigstens einen Kondensationsprodukts (A) erfolgt dabei vorzugsweise in Kombination mit wenigstens einem Thixotropiermittel (B), gegebenenfalls zusätzlich in Kombination mit wenigstens einem Bindemittel (C). Als Thixotropiermittel (B) und Bindemittel (C) eignen sich alle im Zusammenhang mit der erfindungsgemäßen Zusammensetzung, die ein weiterer Gegenstand der vorliegenden Erfindung ist, genannten Thixotropiermittel (B) und Bindemittel (C). Das erfindungsgemäß als Thixotropie-verstärkendes Additiv eingesetzte Kondensationsprodukt (A) ist vorzugsweise selbst kein Thixotropiermittel.

Es wurde überraschend gefunden, dass mit dem erfindungsgemäß eingesetzten Kondensationsprodukt (A) eine Verstärkung der von einem Thixotropiermittel (B) induzierten Thixotropie-Wirkung erzielt werden kann, insbesondere wenn das Thixotropiermittel (B) eine amorphe Kieselsäure, wie beispielsweise eine pyrogene Kieselsäure ist, da in diesem Fall die Gegenwart des Kondensationsprodukts (A) zu einer Verstärkung des durch das Thixotropiermittel (B) aufgebauten Kieselsäurenetzwerks in unterschiedlichen Bindemitteln (C) führt. Daher eignet sich das erfindungsgemäß eingesetzte Kondensationsprodukt (A) überraschenderweise als Thixotropie-verstärkendes Additiv (A), insbesondere in Kombination mit wenigstens einem Thixotropiermittel (B) und gegebenenfalls wenigstens einem Bindemittel (C). Es wurde insbesondere überraschend gefunden, dass durch eine solche Verstärkung des durch das Thixotropiermittel (B) aufgebauten Kieselsäurenetzwerks eine zumindest teilweise Zerstörung des Netzwerkes bei moderatem Temperaturanstieg und/oder moderaten mechanischen Belastungen verhindert werden kann. Es wurde ferner überraschend gefunden, dass durch Verwendung des erfindungsgemäß eingesetzten Kondensationsprodukts (A) als Thixotropie-verstärkendes Additiv die benötigte Menge an eingesetztem Thixotropiermittel (B) zur Erzielung der zumindest gleichen Thixotropierwirkung reduziert werden kann, wodurch das Auftreten von mit einer höheren Menge an einzusetzendem Thixotropiermittel (B) verbundenen negativen Eigenschaften wie beispielsweise unerwünschten Mattierungseffekten bei glänzend eingestellten Beschichtungsformulierungen oder verringerter Festigkeit in Bindemitteln (C), reduziert werden kann. Es wurde ferner überraschend gefunden, dass durch Verwendung des erfindungsgemäß eingesetzten Kondensationsprodukts (A) als Thixotropie-verstärkendes Additiv das Absetzverhalten des Thixotropiermittels (B) positiv beeinflusst werden kann, insbesondere wenn das Thixotropiermittel (B) eine amorphe Kieselsäure, wie beispielsweise eine pyrogene Kieselsäure ist.

Es wurde ferner überraschend gefunden, dass mit dem erfindungsgemäß eingesetzten Kondensationsprodukt (A) eine Verstärkung der von einem Thixotropiermittel (B) induzierten Thixotropie-Wirkung erzielt werden kann, insbesondere wenn Zusammensetzungen enthaltend diese Komponenten sowie wenigstens ein Bindemittel (C) und zudem gegebenenfalls wenigstens einen Härter (D) bereitgestellt werden, die als Klebstoff oder Dichtstoff, insbesondere als Klebstoff, eingesetzt werden, da dadurch gleichzeitig die Bindekraft des gehärteten Klebstoffs oder Dichtstoffs und dadurch die mechanische Stabilität des Klebe- oder Dichtverbunds erhöht werden kann. Dies ist insbesondere beim Einsatz solcher Verbunde unter großer mechanischer Beanspruchung, beispielsweise bei Verklebungen von Halbschalen im Faserverbundbereich wie Flügeln in der Luftfahrt oder Rotorblättern für Windkraftanlagen vorteilhaft, die dadurch Fertigungstoleranzen ausgleichen und eine bessere Kraftübertragung in Strukturbauteile übertragen und somit eine größere Energie aufnehmen können. Insbesondere wurde überraschend gefunden, dass bei Verwendung der erfindungsgemäßen Zusammensetzungen als Klebstoffe oder Dichtstoffe, insbesondere Klebstoffe, diese in Schichtdicken von mehreren Millimetern bis Zentimetern auf zu verklebende Substrate wie beispielsweise vorstehend genannte Rotorblattkomponenten aufgebracht werden können. Insbesondere beim Aufbringen von Klebstoffen in solchen Schichtdicken ist es notwendig, solche Klebstoffe einzusetzen, die sich durch eine ausreichend hohe Viskosität bzw. eine geringe Fließfähigkeit auszeichnen, um den Anforderungen einer über-Kopfanwendung bzw. Applikation an einer senkrechten Ebene ohne abzufließen zu genügen. Gerade bei großflächig zu verklebenden Substraten wie beispielsweise den Rotorblatthälften von Windkraftanlagen werden diesbezüglich entsprechend hohe Anforderungen gestellt.

Zusätzlich wurde gefunden, dass die überraschenden Effekte und Vorteile des erfindungsgemäß als Thixotropie-verstärkendes Additiv eingesetzten Kondensationsprodukts (A) und dieses enthaltende Zusammensetzungen insbesondere dann erzielt werden, wenn das Kondensationsprodukt (A) einen Gehalt an tertiärem Stickstoff im Bereich von 0,5 bis 20 Gew.-%, bezogen auf das Gesamtgewicht des Kondensationsprodukts (A), aufweist, der ein Maß für die

Ausbildung von bei der Umsetzung der Komponente (a1) mit der Komponente (a2) unter Wasserabspaltung im Kondensationsprodukt (A) entstandenen Imidazolin-und/oder Tetrahydropyrimidin-Einheiten ist. Die Bestimmung des Gehalts an tertiärem Stickstoff erfolgt dabei vorzugsweise nach der nachstehend beschriebenen Methode.

Die Begriffe "Thixotropie" und "Thixotropiermittel" sind dem Fachmann bekannt und beispielsweise definiert im Römpp Lexikon, Lacke und Druckfarben, Georg Thieme Verlag 1998 und im Römpp Chemie-Lexikon, Georg Thieme Verlag 1992.

**Komponente (a1)**

Das erfindungsgemäß als Thixotropie-verstärkendes Additiv eingesetzte Kondensationsprodukt (A) ist erhältlich, d.h. wird erhalten, durch Umsetzung wenigstens einer Komponente (a1) mit wenigstens einer Komponente (a2).

Als Komponente (a1) wird dabei wenigstens eine polymerisierte Fettsäure oder wenigstens ein Umsetzungsprodukt (U) von wenigstens zwei polymerisierten Fettsäuren und wenigstens einem wenigstens zwei primäre Amino-Gruppen aufweisenden Polyamin, eingesetzt. Damit sind erfindungsgemäß auch entsprechende zur Herstellung des Kondensationsprodukts (A) einsetzbare polymerisierte Fettsäurederivate der Komponente (a1) wie beispielsweise entsprechende polymerisierte Fettsäureester mit eingeschlossen. Als Komponente (a1) kann daher zur Herstellung des Kondensationsprodukts (A) wenigstens eine polymerisierte Fettsäure oder wenigstens ein polymerisiertes Fettsäurederivat wie beispielsweise wenigstens ein polymerisierter Fettsäureester oder wenigstens ein Umsetzungsprodukt (U) von wenigstens zwei polymerisierten Fettsäuren oder von wenigstens zwei polymerisierten Fettsäurederivaten wie beispielsweise wenigstens zwei polymerisierten Fettsäureestern und wenigstens einem wenigstens zwei primäre Amino-Gruppen aufweisenden Polyamin, eingesetzt werden.

In einer bevorzugten Ausführungsform wird als Komponente (a1) wenigstens eine polymerisierte Fettsäure oder wenigstens ein polymerisiertes Fettsäurederivat wie beispielsweise wenigstens ein polymerisierter Fettsäureester eingesetzt.

In einer anderen bevorzugten Ausführungsform wird als Komponente (a1) wenigstens ein Umsetzungsprodukt (U) von wenigstens zwei polymerisierten Fettsäuren oder von wenigstens zwei polymerisierten Fettsäurederivaten wie beispielsweise wenigstens zwei polymerisierten Fettsäureestern und wenigstens einem wenigstens zwei primäre Amino-Gruppen aufweisenden Polyamin, eingesetzt.

Zur Herstellung der als Komponente (a1) eingesetzten polymerisierten Fettsäure oder des als Komponente (a1) eingesetzten Umsetzungsprodukts (U) wird vorzugsweise wenigstens eine wenigstens einfach ungesättigte Fettsäure, vorzugsweise wenigstens eine wenigstens einfach ungesättigte aliphatische $C_{16}$-$C_{20}$-Monocarbonsäure eingesetzt.

Unter dem Begriff "Fettsäure" wird im Sinne der vorliegenden Erfindung vorzugsweise eine gesättigte oder ungesättigte, vorzugsweise ungesättigte, aliphatische $C_{14}$-$C_{22}$-Monocarbonsäure mit insgesamt 14-22, d.h. 14, 15, 16, 17, 18, 19, 20, 21 oder 22 Kohlenstoffatomen, vorzugsweise eine aliphatische $C_{16}$-$C_{20}$-Monocarbonsäure mit insgesamt 16-20, d.h. 16, 17, 18, 19 oder 20 Kohlenstoffatomen, insbesondere eine aliphatische $C_{18}$-Monocarbonsäure mit insgesamt 18 Kohlenstoffatomen, verstanden, die jeweils genau eine -C(=O)-OH-Gruppe aufweist, d.h. eine Fettsäure, die neben dieser einen -C(=O)-OH-Gruppe einen $C_{13}$-$C_{21}$-aliphatischen Rest mit insgesamt 13-21, d.h. 13, 14, 15, 16, 17, 18, 19, 20 oder 21 Kohlenstoffatomen, vorzugsweise einen $C_{15}$-$C_{19}$-aliphatischen Rest mit insgesamt 15-19, d.h. 15, 16, 17, 18 oder 19 Kohlenstoffatomen, und insbesondere einen $C_{17}$-aliphatischen Rest mit insgesamt 17 Kohlenstoffatomen, aufweist. Der Ausdruck "aliphatisch" umfasst dabei vorzugsweise acyclische gesättigte oder ungesättigte, vorzugsweise ungesättigte, verzweigte oder unverzweigte aliphatische Reste. Dabei weisen ungesättigte aliphatische Reste wenigstens eine, vorzugsweise 1, 2, 3, 4 oder 5, besonders bevorzugt 1, 2, 3 oder 4, ganz besonders bevorzugt 1, 2 oder 3 Kohlenstoff-Doppelbindung(en) auf. Die Fettsäuren können natürliche oder synthetisch erzeugte Fettsäuren sein. Vorzugsweise sind aliphatische $C_{14}$-$C_{22}$-Monocarbonsäure ausgewählt aus der Gruppe bestehend aus Myristinsäure, Pentadecansäure, Palmitinsäure, Margarinsäure, Stearinsäure, Nonadecansäure, Arachinsäure, Henicosansäure, Docosansäure, Myristoleinsäure, Palmitoleinsäure, Petroselinsäure, Ölsäure, Elaidinsäure, Vaccensäure, Gadoleinsäure, Icosensäure, Cetoleinsäure, Erucasäure, Linolsäure, Linolensäure, Calendulasäure, Punicinsäure, Elaeostearinsäure, Arachidonsäure, Timnodonsäure, Clupandonsäure und Cervonsäure. Vorzugsweise sind aliphatische $C_{16}$-$C_{20}$-Monocarbonsäure ausgewählt aus der Gruppe bestehend aus Palmitinsäure, Margarinsäure, Stearinsäure, Nonadecansäure, Arachinsäure, Palmitoleinsäure, Petroselinsäure, Ölsäure, Elaidinsäure, Vaccensäure, Gadoleinsäure, Icosensäure, Linolsäure, Linolensäure, Calendulasäure, Punicinsäure, Elaeostearinsäure, Arachidonsäure und Timnodonsäure. Vorzugsweise sind aliphatische $C_{18}$-Monocarbonsäure ausgewählt aus der Gruppe bestehend aus Stearinsäure, Petroselinsäure, Ölsäure, Elaidinsäure, Vaccensäure, Linolsäure, Linolensäure, Calendulasäure, Punicinsäure und Elaeostearinsäure, insbesondere ausgewählt aus der Gruppe bestehend aus Stearinsäure, Ölsäure, Linolsäure und Linolensäure, am meisten bevorzugt ausgewählt aus der Gruppe bestehend aus Ölsäure, Linolsäure und Linolensäure. Am meisten bevorzugt sind aliphatische $C_{18}$-Monocarbonsäure ausgewählt aus der Gruppe bestehend aus Ölsäure und Linolsäure. Diese beiden Fettsäuren sind ohne weiteres verfügbar und lassen sich vergleichsweise leicht polymerisieren. Gemische

aus Ölsäure und Linolsäure kommen beispielsweise in Tallöl-Fettsäuren vor, die eine handelsübliche Quelle für diese Fettsäuren sind.

Unter dem Begriff "Fettsäure", insbesondere im Zusammenhang mit dem Begriff "polymerisierte Fettsäure", fallen im Sinne der vorliegenden Erfindung vorzugsweise auch Fettsäurederivate wie beispielsweise entsprechende Fettsäureester und/oder Salze dieser Fettsäuren.

Unter dem Begriff "polymerisierte Fettsäure" wird im Sinne der vorliegenden Erfindung vorzugsweise eine dimerisierte und/oder eine trimerisierte Fettsäure verstanden. Dimerisierte und trimerisierte Fettsäuren sind kommerziell erhältlich. Beispiel für handelsübliche dimerisierte Fettsäuren sind die Produkte Empol 1003, Empol 1005, Empol 1008 (hydriert), Empol 1012 (hydriert), Empol 1016, Empol 1026, Empol 1028,Empol 1061, Empol 1062, Pripol 1006 (hydriert), Pripol 1009 (hydriert), Pripol 1012, Pripol 1013, Pripol 1017, Pripol 1022, Pripol 1025 (hydriert), Pripol 1027 der Firma Croda und für handelsübliche trimerisierte Fettsäuren die Produkte Empol 1043 von BASF und Pripol 1040 von Croda.

In einer bevorzugten Ausführungsform der vorliegenden Erfindung werden zur Herstellung der als Komponente (a1) eingesetzten polymerisierten Fettsäure oder des als Komponente (a1) eingesetzten Umsetzungsprodukts (U) aliphatische wenigstens einfach ungesättigte $C_{14}$-$C_{22}$-Monocarbonsäuren, vorzugsweise wenigstens einfach ungesättigte $C_{16}$-$C_{20}$-Monocarbonsäuren, besonders bevorzugt wenigstens einfach ungesättigte $C_{18}$- Monocarbonsäuren eingesetzt.

Vorzugsweise weisen die zur Herstellung der Komponente (a1) eingesetzten Fettsäuren eine Säurezahl von 100 bis 350 mg KOH pro g Fettsäure, besonders bevorzugt von 125 bis 300 mg KOH pro g Fettsäure, ganz besonders bevorzugt von 150 bis 250 mg KOH pro g Fettsäure auf.

Dem Fachmann sind Bestimmungsmetoden zur Ermittlung der Säurezahl wie beispielsweise eine Titration einer Lösung einer Fettsäure, von der die Säurezahl zu bestimmen ist, mit einer KOH-Lösung gegen einen Indikator wie Phenolphthalein, bekannt.

Als Ausgangsmaterial zur Herstellung der Komponente (a1) werden wenigstens einfach ungesättigte Fettsäuren eingesetzt. Dem Fachmann sind Herstellungsverfahren zur Bereitstellung polymerisierter Fettsäuren, wie dimerisierter, trimerisierter und höher polymerisierter Fettsäuren bekannt. Die Herstellung polymerisierter Fettsäuren kann beispielsweise nach einem radikalischen Mechanismus wie in DE 25 06 211 A1 beschrieben erfolgen oder durch Polymerisation von ungesättigten Fettsäuren und anschließenden Destillationsverfahren zur Abtrennung von nicht umgesetzten Fettsäuren, d.h. nicht umgesetzten aliphatischen Monocarbonsäuren, von dimerisierten, trimerisierten und höher polymerisierter Fettsäuren. Solche Polymerisations-Reaktionen sind dem Fachmann bekannt und zum Beispiel in US 2,793,219 A und US 2,955,121 A beschrieben. Die erhaltenen dimerisierten und trimerisierten Fettsäuren können jeweils analog mittels Destillation voneinander und zudem jeweils von höherwertigen Fettsäuren abgetrennt werden und gegebenenfalls weiteren Umsetzungsreaktionen wie beispielsweise Hydrierungen unterworfen werden. Durch solche Hydrierungsreaktionen können die polymerisierten wie beispielsweise trimerisierten oder dimerisierten Fettsäuren gesättigt werden, wodurch die zur Herstellung des Kondensationsprodukts (A) eingesetzten trimerisierten oder polymerisierten Fettsäuren gesättigt sein können. Kommerziell erhältliche Gemische polymerisierter Fettsäuren enthalten üblicherweise im Wesentlichen, d.h. zu wenigstens 99,0 Gew.%, vorzugsweise zu wenigstens 99,2 oder 99,4Gew.-%, besonders bevorzugt zu wenigstens 99,6 oder 99,8 Gew.%, insbesondere zu wenigstens 99,9 oder 100 Gew.-%, jeweils bezogen auf das Gesamtgewicht des Gemisches, dimerisierte und trimerisierte Fettsäuren sowie gegebenenfalls höher polymerisierte Fettsäuren, d.h. nicht umgesetzte Fettsäuren (aliphatische $C_{14}$-$C_{22}$-Monocarbonsöuren) in Anteilen von höchstens 1,0 Gew.-%, vorzugsweise von höchstens 0,8 oder 0,6 Gew.-%, besonders bevorzugt von höchstens 0,4 oder 0,2 Gew.-%, insbesondere von höchstens 0,1 Gew.-%, jeweils bezogen auf das Gesamtgewicht des Gemisches. Insbesondere enthält das erfindungsgemäß zur Herstellung der Komponente (a1) eingesetzte Gemisch polymerisierter Fettsäuren keine nicht umgesetzten Fettsäuren.

In einer bevorzugten Ausführungsform der vorliegenden Erfindung wird zur Herstellung des Kondensationsprodukts (A) als Komponente (a1)

wenigstens eine trimerisierte Fettsäure, wenigstens eine dimerisierte Fettsäure, oder ein Gemisch polymerisierter Fettsäuren, welches wenigstens eine trimerisierte und wenigstens eine dimerisierte Fettsäure enthält,

oder ein Umsetzungsprodukt (U) von wenigstens zwei polymerisierten Fettsäuren ausgewählt aus der Gruppe bestehend aus dimerisierten und trimerisierten Fettsäuren und Mischungen davon, und wenigstens einem wenigstens zwei primäre Amino-Gruppen aufweisenden Polyamin eingesetzt.

Vorzugsweise wird zur Herstellung des Kondensationsprodukts (A) als Komponente (a1)

ein Gemisch polymerisierter Fettsäuren, welches wenigstens eine trimerisierte und wenigstens eine dimerisierte Fettsäure enthält, eingesetzt,

> wobei das Gemisch einen Anteil von wenigstens 70 Gew.-% an wenigstens einer trimerisierten Fettsäure und einen Anteil von höchstens 30 Gew.-% an wenigstens einer dimerisierten Fettsäure, jeweils bezogen auf das Gesamtgewicht des Gemisches,
>
> oder einen Anteil von wenigstens 70 Gew.-% an wenigstens einer dimerisierten Fettsäure und einen Anteil von höchstens 30 Gew.-% an wenigstens einer trimerisierten Fettsäure, jeweils bezogen auf das Gesamtgewicht des

Gemisches, aufweist,

oder ein Umsetzungsprodukt (U) von wenigstens zwei polymerisierten Fettsäuren (nachfolgend als Fettsäurengemisch bezeichnet) ausgewählt aus der Gruppe bestehend aus dimerisierten und trimerisierten Fettsäuren und Mischungen davon,

wobei das Fettsäurengemisch einen Anteil von wenigstens 70 Gew.-% an wenigstens einer trimerisierten Fettsäure und einen Anteil von höchstens 30 Gew.-% an wenigstens einer dimerisierten Fettsäure, jeweils bezogen auf das Gesamtgewicht des Fettsäurengemisches,

oder einen Anteil von wenigstens 70 Gew.-% an wenigstens einer dimerisierten Fettsäure und einen Anteil von höchstens 30 Gew.-% an wenigstens einer trimerisierten Fettsäure, jeweils bezogen auf das Gesamtgewicht des Fettsäurengemisches, aufweist,

und wenigstens einem wenigstens zwei primäre Amino-Gruppen aufweisenden Polyamin, eingesetzt.

Besonders bevorzugt wird zur Herstellung des Kondensationsprodukts (A) als Komponente (a1) ein Gemisch polymerisierter Fettsäuren, welches wenigstens eine trimerisierte und wenigstens eine dimerisierte Fettsäure enthält, eingesetzt,

wobei das Gemisch einen Anteil von wenigstens 70 Gew.-%, vorzugsweise von wenigstens 75 Gew,.-%, besonders bevorzugt von wenigstens 80 Gew.-%, an wenigstens einer trimerisierten Fettsäure und einen Anteil von höchstens 30 Gew.-%, vorzugsweise von höchstens 25 Gew.-%, besonders bevorzugt von höchstens 20 Gew.-%, an wenigstens einer dimerisierten Fettsäure, jeweils bezogen auf das Gesamtgewicht des Gemisches,
oder einen Anteil von wenigstens 70 Gew.-%, vorzugsweise von wenigstens 75 Gew.-%, besonders bevorzugt von wenigstens 80 Gew.-%, an wenigstens einer dimerisierten Fettsäure und einen Anteil von höchstens 30 Gew.-%, vorzugsweise von höchstens 25 Gew.-%, besonders bevorzugt von höchstens 20 Gew.-%, an wenigstens einer trimerisierten Fettsäure, jeweils bezogen auf das Gesamtgewicht des Gemisches, aufweist,

oder ein Umsetzungsprodukt (U) von wenigstens zwei polymerisierten Fettsäuren (nachfolgend als Fettsäurengemisch bezeichnet) ausgewählt aus der Gruppe bestehend aus dimerisierten und trimerisierten Fettsäuren und Mischungen davon,

wobei das Fettsäurengemisch einen Anteil von wenigstens 70 Gew.-%, vorzugsweise von wenigstens 75 Gew,.-%, besonders bevorzugt von wenigstens 80 Gew.-%, an wenigstens einer trimerisierten Fettsäure und einen Anteil von höchstens 30 Gew.-%, vorzugsweise von höchstens 25 Gew.-%, besonders bevorzugt von höchstens 20 Gew.-%, an wenigstens einer dimerisierten Fettsäure, jeweils bezogen auf das Gesamtgewicht des Fettsäurengemisches,

oder einen Anteil von wenigstens 70 Gew.-%, vorzugsweise von wenigstens 75 Gew.-%, besonders bevorzugt von wenigstens 80 Gew.-%, an wenigstens einer dimerisierten Fettsäure und einen Anteil von höchstens 30 Gew.-%, vorzugsweise von höchstens 25 Gew.-%, besonders bevorzugt von höchstens 20 Gew.-%, an wenigstens einer trimerisierten Fettsäure, jeweils bezogen auf das Gesamtgewicht des Fettsäurengemisches, aufweist,

und wenigstens einem wenigstens zwei primäre Amino-Gruppen aufweisenden Polyamin, eingesetzt.

Zur Herstellung des als Komponente (a1) eingesetzten Umsetzungsprodukts (U) wird wenigstens ein wenigstens zwei primäre Amino-Gruppen aufweisendes Polyamin, eingesetzt.

Als Polyamin eignet sich vorzugsweise wenigstens ein Polyalkyenpolyamin, welches als Komponente (a2) zur Herstellung des Kondensationsprodukts (A) eingesetzt wird.

Alle im Zusammenhang mit dem Polyalkylenpolyamin (a2) nachstehend beschriebenen bevorzugten Ausführungsformen sind auch bevorzugte Ausführungsformen des zur Herstellung des Umsetzungsprodukts (U) eingesetzten Polyamins.

Unter dem Begriff "Polyamin" wird im Sinne der vorliegenden Erfindung vorzugsweise eine Verbindung verstanden, welche wenigstens zwei primäre Amino-Gruppen aufweist. Insgesamt kann ein Polyamin jedoch bis einschließlich 10 Amino-Gruppen aufweisen, d.h. zusätzlich zu den wenigstens zwei primären Amino-Gruppen noch bis zu einschließlich 8 weitere, d.h. 1, 2, 3, 4, 5, 6, 7 oder 8, vorzugsweise bis zu einschließlich 5 weitere Amino-Gruppen enthalten, bei denen es sich vorzugsweise um primäre oder sekundäre, besonders bevorzugt jeweils um sekundäre Amino-Gruppen handelt. Ein "Polyamin" im Sinne der vorliegenden Erfindung kann ein (hetero)aliphatisches, (hetero)cycloaliphatisches oder (hetero)aromatisches Polyamin sein. Vorzugsweise ist das Polyamin ein Diamin oder Triamin, besonders bevorzugt ein Diamin. Vorzugsweise enthält das Polyamin, vorzugsweise das Diamin eine die wenigstens

zwei primären Amino-Gruppe miteinander verknüpfende Gruppe, die vorzugsweise ausgewählt ist aus der Gruppe bestehend aus $-C_{1-5}$-Alkylen-, -(Hetero)cycloaliphat-, -(Hetero)aromat- $-C_{1-5}$-Alkylen-(Hetero)cycloaliphat- $C_{1-5}$-Alkylen-, und $-C_{1-5}$-Alkylen-(Hetero)aromat- $C_{1-5}$-Alkylen-, wobei der der verknüpfenden Gruppen gegebenenfalls substituiert sein kann.

Vorzugsweise ist das zur Herstellung des Umsetzungsprodukts (U) eingesetzte Polyamin ein Polyamin nachstehender allgemeiner Formel (IV)

$$H_2N\text{-}Z\text{-}NH_2 \qquad (IV),$$

worin Z ausgewählt ist aus der Gruppe bestehend aus $-C_{1-10}$-Alkylen-, -(Hetero)cycloaliphat-, -Aryl-, -Heteroaryl-, $-C_{1-10}$-Alkylen-(Hetero)cycloaliphat-$C_{1-10}$-Alkylen-, $-C_{1-10}$-Alkylen-Aryl- $C_{1-10}$-Alkylen-und $-C_{1-10}$-Alkylen-Heteroaryl-$C_{1-10}$-Alkylen-.

Bevorzugte Polyamine sind Ethylendiamin, 1,3-Diaminipropan, Diethylentriamin, Ethylenpropylentriamin, Dipropylentriamin, Triethylentetramin, Diethylenpropylentetramin, Dipropylenethylentetramin, Tripropylentetramin, Tetraethylenpentamin, Triethylenpropylenpentamin, Diethylendipropylenpentamin, Tripropylenethylenpentamin, Tetrapropylenpentamin, N-(Aminoethyl)ethanolamin, Pentaethylenhexamin, Tetraethylenpropylenhexamin, Triethylendipropylenhexamin Diethylentripropylenhexamin, Tetrapropylenethylenhexamin, Pentapropylenhexamin, Hexaethylenheptamin, Pentaethylenpropylenheptamin, Tetraethylendipropylenheptamin, Triethylentripropylenheptamin, Diethylentetrapropylenheptamin, Pentapropylenethylenheptamin, und Hexapropylenheptamin. Insbesondere bevorzugte Polyamine sind ausgewählt aus der Gruppe bestehend aus Diethylentriamin, Ethylenpropylentriamin, Dipropylentriamin, Triethylentetramin, Tripropylentetramin, Tetraethylenpentamin, Tetrapropylenpentamin, Pentaethylenhexamin, Pentapropylenhexamin, Hexaethylenheptamin, Hexapropylenheptamin, N-3-Aminopropylethylendiamin, N-3-Aminoethylpropylendiamin, N,N'-Bis(3-aminopropyl)ethylendiamin, N,N-Bis(3-aminopropyl)ethylendiamin, N,N,N'-Tris(3-aminopropyl)ethylendiamin, N,N,N',N'-Tetrakis(3-aminopropyl)ethylendiamin, N-3-Aminopropyl-1,3-Diaminopropan, N,N'-Bis(3-aminopropyl)-1,3-diaminopropan, N,N-Bis(3-aminopropyl)-1,3-diaminopropan, N,N,N'-Tris(3-aminopropyl)-1,3-diaminopropan, Tetrakis(3-aminopropyl)-1,3-diaminopropan, 1,2-Diaminopropan, Isophorondiamin, p-Phenylendiamin, m-Phenylendiamin, m-Xylylendiamin, p-Xylylendiamin, und 1,6-Diaminohexan.

Das erfindungsgemäß eingesetzte Polyamin muss dabei nicht zwingend zur Ausbildung wenigstens einer Imidazolin- und/oder Tetrahydropyrimidin-Einheit befähigt sein. Ein "Polyamin" im Sinne der vorliegenden Erfindung kann zudem wenigstens eine weitere vorzugsweise endständige funktionelle Gruppe aufweisen.

Das Umsetzungsprodukt (U) ist vorzugsweise ein Bisamid von zwei polymerisierten Fettsäuren und einem wenigstens zwei primäre Amino-Gruppen aufweisenden Diamin.

Vorzugsweise wird zur Herstellung des Umsetzungsprodukts (U) pro primärer Amino-Gruppe des eingesetzten Polyamins ein Überschuss an wenigstens zwei polymerisierten Fettsäuren eingesetzt. Die wenigstens zwei polymerisierten Fettsäuren können gleich oder verschieden sein.

Werden zur Herstellung des Umsetzungsprodukts (U) zwei dimerisierte Fettsäuren und ein zwei primäre Amino-Gruppen aufweisendes Polyamin eingesetzt, so weist das Umsetzungsprodukt (U) vorzugsweise zwei Amid-Bindungen und zwei freie Carbonsäure-Gruppen auf. Werden zur Herstellung des Umsetzungsprodukts (U) eine dimerisierte und eine trimerisierte Fettsäure und ein zwei primäre Amino-Gruppen aufweisendes Polyamin eingesetzt, so weist das Umsetzungsprodukt (U) vorzugsweise zwei Amid-Bindungen und drei freie Carbonsäure-Gruppen auf. Werden zur Herstellung des Umsetzungsprodukts (U) zwei trimerisierte Fettsäuren und ein zwei primäre Amino-Gruppen aufweisendes Polyamin eingesetzt, so weist das Umsetzungsprodukt (U) vorzugsweise zwei Amid-Bindungen und vier freie Carbonsäure-Gruppen auf.

**Komponente (a2)**

Das erfindungsgemäß als Thixotropie-verstärkendes Additiv eingesetzte Kondensationsprodukt (A) ist erhältlich, d.h. wird erhalten, durch Umsetzung wenigstens einer Komponente (a1) mit wenigstens einer Komponente (a2).

Als Komponente (a2) wird wenigstens ein Polyalkylenpolyamin eingesetzt, welches zur Ausbildung wenigstens einer Imidazolin- und/oder Tetrahydropyrimidin-Einheit befähigt ist und welches wenigstens zwei primäre Amino-Gruppen oder wenigstens eine primäre und wenigstens eine sekundäre Amino-Gruppe aufweist. Gegebenenfalls kann Polyalkylenpolyamin (a2) wenigstens eine weitere funktionelle Gruppe aufweisen wie beispielsweise wenigstens eine vorzugsweise endständige Hydroxyl-Gruppe.

In einer bevorzugten Ausführungsform wird als Komponente (a2) wenigstens ein Polyalkylenpolyamin eingesetzt, welches zur Ausbildung wenigstens einer Imidazolin- und/oder Tetrahydropyrimidin-Einheit befähigt ist und welches wenigstens zwei primäre Amino-Gruppen aufweist und welches gegebenenfalls zudem wenigstens eine sekundäre Amino-Gruppe aufweist.

In einer anderen bevorzugten Ausführungsform wird als Komponente (a2) wenigstens ein Polyalkylenpolyamin

eingesetzt, welches zur Ausbildung wenigstens einer Imidazolin- und/oder Tetrahydropyrimidin-Einheit befähigt ist und welches wenigstens eine primäre, vorzugsweise ein oder zwei primäre, und wenigstens eine sekundäre, vorzugsweise ein oder zwei sekundäre, Amino-Gruppe aufweist und welches gegebenenfalls zudem wenigstens eine Hydroxyl-Gruppe aufweist, welche vorzugsweise endständig ist.

Vorzugsweise weist das zur Herstellung des Kondensationsprodukts (A) als Komponente (a2) eingesetzte Polyalkylenpolyamin als wenigstens zwei primäre Amino-Gruppen wenigstens zwei endständige primäre Amino-Gruppen oder als wenigstens eine primäre Amino-Gruppe wenigstens eine endständige primäre Amino-Gruppe auf.

In einer bevorzugten Ausführungsform der vorliegenden Erfindung weist die Komponente (a2) wenigstens eine Ethylen- und/oder wenigstens eine Propylen-Einheit als Alkylen-Einheit auf, die eine der wenigstens zwei primären Amino-Gruppen mit der anderen verknüpft oder die die wenigstens eine primäre Amino-Gruppe mit der wenigstens einen sekundären Amino-Gruppe verknüpft.

Unter dem Begriff "Polyalkylenpolyamin" wird im Sinne der vorliegenden Erfindung vorzugsweise eine Verbindung verstanden, welche wenigstens zwei, vorzugsweise wenigstens drei, Amino-Gruppen aufweist. Dabei weist ein Polyalkylenpolyamin wenigstens eine primäre und wenigstens eine sekundäre Amino-Gruppe oder wenigstens zwei primäre Amino-Gruppen auf. Insgesamt kann ein Polyalkylenpolyamin jedoch bis einschließlich 10 Amino-Gruppen aufweisen, d.h. zusätzlich zu den wenigstens zwei primären oder der wenigstens einen primären und wenigstens einen sekundären Amino-Gruppe noch bis zu einschließlich 8 weitere, d.h. 1, 2, 3, 4, 5, 6, 7 oder 8, vorzugsweise bis zu einschließlich 5 weitere Amino-Gruppen enthalten, bei denen es sich vorzugsweise um primäre oder sekundäre, besonders bevorzugt jeweils um sekundäre Amino-Gruppen handelt. Ein "Polyalkylenpolyamin" im Sinne der vorliegenden Erfindung enthält zudem wenigstens eine $C_2$- oder $C_3$-Alkyleneinheit, d.h. wenigstens eine Ethylen oder Propylen-Einheit innerhalb der chemischen Struktur der Komponente (a2), die wenigstens eine primäre Amino-Gruppe mit wenigstens einer weiteren primären oder mit wenigstens einer sekundären Amino-Gruppe verknüpft, wodurch das Polyalkylenpolyamin zur Ausbildung wenigstens einer Imidazolin- und/oder Tetrahydropyrimidin-Einheit befähigt ist. Ein "Polyalkylenpolyamin" im Sinne der vorliegenden Erfindung kann aber wenigstens eine weitere Alkylen-Einheit aufweisen, vorzugsweise wenigstens zwei oder wenigstens drei weitere Alkylen-Einheiten, vorzugsweise jeweils $C_1$-$C_5$-Alkylen-Einheiten, d.h. Alkylen-Einheiten mit 1, 2, 3, 4 oder 5 Kohlenstoffatomen, besonders bevorzugt jeweils $C_1$-$C_3$-Alkylen-Einheiten, d.h. Alkylen-Einheiten mit 1, 2 oder 3 Kohlenstoffatomen, die vorzugsweise ausgewählt sein können aus der Gruppe bestehend aus Methylen-, Ethylen-, Propylen-, Butylen und Pentylen-Einheiten, besonders bevorzugt ausgewählt aus der Gruppe bestehend aus Ethylen- und Propylen-Einheiten. Jedoch kann das Polyalkylenpolyamin vorzugsweise bis zu 8 solcher Alkylen-Einheiten aufweisen. Durch jeweils eine Alkylen-Einheit werden dabei vorzugsweise zwei Amino-Gruppen innerhalb des Polyalkylenpolyamins miteinander verknüpft. Ein "Polyalkylenpolyamin" im Sinne der vorliegenden Erfindung kann zudem wenigstens eine weitere vorzugsweise endständige funktionelle Gruppe wie beispielsweise wenigstens eine vorzugsweise endständige Hydroxyl-Gruppe aufweisen.

In einer bevorzugten Ausführungsform der vorliegenden Erfindung ist das zur Herstellung des Kondensationsprodukts (A) als Komponente (a2) eingesetzte Polyalkylenpolyamin ein Polyalkylenpolyamin der allgemeinen Formel (I)

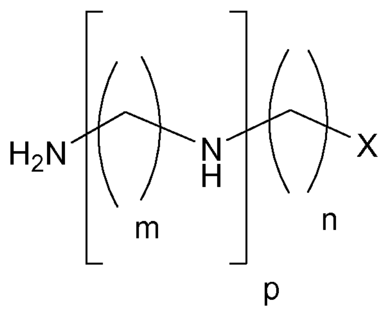

(I),

worin

m für 2 oder 3, vorzugsweise für 2, steht,

n für 0, 1, 2, 3 oder 4, vorzugsweise für 1, 2, 3 oder 4, ganz besonders bevorzugt für 1, 2 oder 3, insbesondere für 2 oder 3, am meisten bevorzugt für 2 steht steht,

p für 1, 2, 3 oder 4, vorzugsweise für 1, 2 oder 3, ganz besonders bevorzugt für 1 oder 2, insbesondere für 2, steht, und

X für H steht, wenn n 0 bedeutet oder

X für $NH_2$ oder OH steht, wenn n für 1, 2, 3 oder 4 steht.

In einer anderen bevorzugten Ausführungsform der vorliegenden Erfindung ist das zur Herstellung des Kondensationsprodukts (A) als Komponente (a2) eingesetzte Polyalkylenpolyamin ein Polyalkylenpolyamin der allgemeinen Formel (Ia)

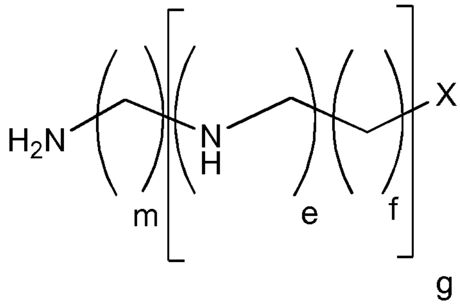

(Ia),

worin

m für 2 oder 3, vorzugsweise für 2 steht,

e für 1, 2, 3 oder 4, vorzugsweise für 1, 2 oder 3, ganz besonders bevorzugt für 1 oder 1, insbesondere für 1, steht,

f für 0, 1, 2, 3 oder 4, vorzugsweise für 1, 2, 3 oder 4, ganz besonders bevorzugt für 1, 2 oder 3, insbesondere für 1 oder 2, am meisten bevorzugt für 1 steht, und

g für 1, 2, 3 oder 4, vorzugsweise für 1, 2 oder 3, ganz besonders bevorzugt für 1 oder 2, insbesondere für 2, steht, und zwar insbesondere dann, wenn f für 1 oder 2 oder für 1 steht,

und X für OH oder $NH_2$ steht.

Vorzugsweise ist das Polyalkylenpolyamin (a2) ausgewählt aus der Gruppe bestehend aus Ethylendiamin, 1,3-Diaminopropan, Diethylentriamin, Ethylenpropylentriamin, Dipropylentriamin, Triethylentetramin, Diethylenpropylentetramin, Dipropylenethylentetramin, Tripropylentetramin, Tetraethylenpentamin, Triethylenpropylenpentamin, Diethylendipropylenpentamin, Tripropylenethylenpentamin, Tetrapropylenpentamin, N-(Aminoethyl)ethanolamin, Pentaethylenhexamin, Tetraethylenpropylenhexamin, Triethylendipropylenhexamin Diethylentripropylenhexamin, Tetrapropylenethylenhexamin, Pentapropylenhexamin, Hexaethylenheptamin, Pentaethylenpropylenheptamin, Tetraethylendipropylenheptamin, Triethylentripropylenheptamin, Diethylentetrapropylenheptamin, Pentapropylenethylenheptamin, und Hexapropylenheptamin. Insbesondere bevorzugte Polyalkylenpolyamine (a2) sind ausgewählt aus der Gruppe bestehend aus Diethylentriamin, Ethylenpropylentriamin, Dipropylentriamin, Triethylentetramin, Tripropylentetramin, Tetraethylenpentamin, Tetrapropylenpentamin, Pentaethylenhexamin, Pentapropylenhexamin, Hexaethylenheptamin, Hexapropylenheptamin, N-3-Aminopropylethylendiamin, N-3-Aminoethylpropylendiamin, N,N'-Bis(3-aminopropyl)ethylendiamin, N,N-Bis(3-aminopropyl)ethylendiamin, N,N,N'-Tris(3-aminopropyl)ethylendiamin, N,N,N',N'-Tetrakis(3-aminopropyl)ethylendiamin, N-3-Aminopropyl-1,3-Diaminopropan, N,N'-Bis(3-aminopropyl)-1,3-diaminopropan, N,N-Bis(3-aminopropyl)-1,3-diaminopropan, N,N,N'-Tris(3-aminopropyl)-1,3-diaminopropan und Tetrakis(3-aminopropyl)-1,3-diaminopropan. Ein ganz besonders bevorzugtes Polyalkylenpoylamin (a2) ist Triethylentetramin.

Vorzugsweise weist das als Komponente (a2) eingesetzte Polyalkylenpolyamin eine Amin-Zahl von 300 bis 2000 mg KOH pro g Polyalkylenpolyamin, besonders bevorzugt von 500 bis 1900 mg KOH pro g Polyalkylenpolyamin, ganz besonders bevorzugt von 700 bis 1700 mg KOH pro g Polyalkylenpolyamin, insbesondere von 900 bis 1500 mg KOH pro g Polyalkylenpolyamin auf.

Dem Fachmann sind Bestimmungsmetoden zur Ermittlung der Amin-Zahl bekannt. Vorzugsweise wird die Amin-Zahl gemäß DIN 16945 bestimmt.

**Kondensationsprodukt (A)**

Das Kondensationsprodukt (A) ist erhältlich durch Umsetzung wenigstens einer Komponente (a1) mit wenigstens einer Komponente (a2).

Vorzugsweise weist das Kondensationsprodukt (A) eine Amin-Zahl von 100 bis 1500 mg KOH pro g Kondensationsprodukt (A), besonders bevorzugt von 150 bis 1200 mg KOH pro g Kondensationsprodukt (A), ganz besonders bevorzugt von 200 bis 1000 mg KOH pro g Kondensationsprodukt (A), insbesondere von 250 bis 800 mg KOH pro g Kondensationsprodukt (A), am meisten bevorzugt von 280 bis 600 mg KOH pro g Kondensationsprodukt auf.

Vorzugsweise weist das Kondensationsprodukt (A) eine Säurezahl von höchstens 10 mg KOH pro g Kondensationsprodukt (A), besonders bevorzugt von höchstens 5 mg KOH pro g Kondensationsprodukt (A), ganz besonders bevorzugt von höchstens 4 mg KOH pro g Kondensationsprodukt (A), insbesondere von höchstens 3 mg KOH pro g Kondensationsprodukt (A), am meisten bevorzugt von höchstens 2 mg KOH oder von höchstens 1 mg KOH oder von < 1 mg KOH, jeweils pro g Kondensationsprodukt (A), auf.

Das Kondensationsprodukt (A) enthält vorzugsweise Imidazolin- und/oder Tetrahydropyrimidin-Einheiten, die bei der Herstellung des Kondensationsprodukts, d.h. bei der Umsetzung von wenigstens einer Komponente (a1) mit wenigstens einer Komponente (a2) ausgebildet werden. Ein Maß zum Nachweis solcher Imidazolin- und/oder Tetrahydropyrimidin-Einheiten im Kondensationsprodukt (A) ist der Gehalt an tertiärem Stickstoff im Kondensationsprodukt (A). Ein weiteres Maß zum Nachweis solcher Imidazolin- und/oder Tetrahydropyrimidin-Einheiten im Kondensationsprodukt (A) ist das Auftreten einer charakteristischen Bande bei etwa 1600 $cm^{-1}$ im Infrarot-Spektrum (IR-Spektrum), die für die Gegenwart einer N=C-Doppelbindung charakteristisch ist (H. Hein et al., Fette, Seifen, Anstrichmittel 1978, 80, Seite 448).

Der Gehalt an tertiärem Stickstoff im Kondensationsprodukt (A) wird vorzugsweise mittels der nachstehend beschriebenen Methode bestimmt.

Vorzugsweise weist das Kondensationsprodukt (A) einen Gehalt an tertiärem Stickstoff im Bereich von 0,2 bis 25 Gew.-%, noch bevorzugter im Bereich von 0,4 bis 25 Gew.-%, besonders bevorzugt im Bereich von 0,6 bis 25 Gew.-%, ganz besonders bevorzugt im Bereich von 0,8 bis 25 Gew.-%, insbesondere im Bereich von 1,0 bis 25 Gew.-%, am meisten bevorzugt im Bereich von 1,2 bis 25 Gew.-%, jeweils bezogen auf das Gesamtgewicht des Kondensationsprodukts (A), auf.

In einer anderen bevorzugten Ausführungsform weist das Kondensationsprodukt (A) einen Gehalt an tertiärem Stickstoff im Bereich von 0,5 bis 20 Gew.-%, noch bevorzugter im Bereich von 0,9 bis 15 Gew.-%, besonders bevorzugt im Bereich von 1,0 bis 12 Gew.-%, ganz besonders bevorzugt im Bereich von 1,1 bis 10 Gew.-%, insbesondere im Bereich von 1,2 bis 8 Gew.-%, am meisten bevorzugt im Bereich von 1,3 bis 6 Gew.-%, jeweils bezogen auf das Gesamtgewicht des Kondensationsprodukts (A), auf.

In einer weiteren bevorzugten Ausführungsform weist das Kondensationsprodukt (A) einen Gehalt an tertiärem Stickstoff im Bereich von wenigstens 0,6 Gew.-%, noch bevorzugter von wenigstens 0,8 Gew.-%, besonders bevorzugt von wenigstens 1,0 Gew.-%, ganz besonders bevorzugt von wenigstens 1,2 Gew.-%, insbesondere von wenigstens 1,3 Gew.-%, am meisten bevorzugt von wenigstens 1,5 Gew.-%, jeweils bezogen auf das Gesamtgewicht des Kondensationsprodukts (A), auf.

Vorzugsweise werden zur Herstellung des Kondensationsprodukts (A) pro Carbonsäure-Gruppe der als Komponente (a1) eingesetzten polymerisierten Fettsäure oder des als Komponente (a1) eingesetzten Umsetzungsprodukts (U) wenigstens 0,90, besonders bevorzugt wenigstens 0,95 Mol, ganz besonders bevorzugt wenigstens 1,0 Mol, an Polyalkylenpolyamin (a2) eingesetzt. Werden beispielsweise 1 Mol einer trimerisierten Fettsäure als Komponente (a1) eingesetzt, so werden in diesem Fall wenigstens 2,7 Mol, vorzugsweise wenigstens 2,85 Mol, besonders bevorzugt wenigstens 3,0 Mol, an Polyalkylenpolyamin-Komponente (a2) zur Herstellung des Kondensationsprodukts (A) eingesetzt. Um unerwünschte Vernetzungsreaktionen zu vermeiden, kann das Polyalkylenpolyamin (a2) insbesondere im Überschuss eingesetzt werden. Dabei werden zweckmäßig pro Carbonsäure-Gruppe der als Komponente (a1) eingesetzten polymerisierten Fettsäure oder des als Komponente (a1) eingesetzten Umsetzungsprodukts (U) höchstens 1,5 Mol, vorzugsweise höchstens 1,3 Mol, besonders bevorzugt höchstens 1,2 Mol und insbesondere höchstens 1,1 Mol an Komponente (a2) eingesetzt.

Vorzugsweise erfolgt die Umsetzung von

(a1) wenigstens einer polymerisierten Fettsäure oder wenigstens eines Umsetzungsprodukts (U) von wenigstens zwei polymerisierten Fettsäuren und wenigstens einem wenigstens zwei primäre Amino-Gruppen aufweisenden Polyamin,
mit

(a2) wenigstens einem zur Ausbildung wenigstens einer Imidazolin-und/oder Tetrahydropyrimidin-Einheit befähigten Polyalkylenpolyamin, welches wenigstens zwei primäre Amino-Gruppen oder wenigstens eine primäre und wenigstens eine sekundäre Amino-Gruppe aufweist,

zur Herstellung des Kondensationsprodukts (A) in zwei Schritten (Schritt 1 und Schritt 2), die jeweils so oft wiederholt werden wie Carbonsäure-Gruppen in der Komponente (a1) vorhanden sind, insbesondere wenn zur Herstellung des Kondensationsprodukts (A) pro Carbonsäure-Gruppe der als Komponente (a1) eingesetzten polymerisierten Fettsäure oder des als Komponente (a1) eingesetzten Umsetzungsprodukts (U) wenigstens ein Mol an Polyalkylenpolyamin (a2) eingesetzt werden. Bei Einsatz von dem Fachmann bekannten Methoden kann die Herstellung des Kondensationsprodukt (A) auch einschrittig erfolgen, beispielsweise bei Wahl eines hohen Temperaturbereichs, beispielsweise von 150°C-300°C, bei dem die Reaktion durchgeführt wird.

In einem ersten Schritt (Schritt 1) erfolgt unter Abspaltung eines Wassermoleküls die Ausbildung einer Amid-Bindung durch Reaktion der wenigstens einen primären Amino-Gruppe des Polyalkylenpolyamins (a2) mit einer Carbonsäure-Gruppe der Komponente (a1). Dieser Schritt 1 wird für jede Carbonsäure-Gruppe der Komponente (a1) wiederholt, bis im Wesentlichen jede, vorzugsweise jede, Carbonsäure-Gruppe mit der wenigstens einen primären Amino-Gruppe des als Komponente (a2) eingesetzten Polyalkylenpolyamins unter Ausbildung einer Amid-Bindung reagiert hat, insbesondere wenn zur Herstellung des Kondensationsprodukts (A) pro Carbonsäure-Gruppe der als Komponente (a1) eingesetzten polymerisierten Fettsäure oder des als Komponente (a1) eingesetzten Umsetzungsprodukts (U) wenigstens ein Mol an Polyalkylenpolyamin (a2) eingesetzt werden. Auf diese Weise werden beispielsweise bei Einsatz einer trimerisierten Fettsäure als Komponente (a1) unter Abspaltung von drei Molekülen Wasser und zweifacher Wiederholung des Schritts 1 insgesamt drei Amid-Bindungen durch Reaktion jeder der drei Carbonsäure-Gruppen der trimerisierten Fettsäure mit jeweils einer primären Amino-Gruppe jeweils eines Polyalkylenpolyamin-Moleküls gebildet.

Vorzugsweise wird Schritt 1 bei Reaktionstemperaturen im Bereich von 120°C bis 200°C, besonders bevorzugt im Bereich von 130°C bis 190°C, ganz besonders bevorzugt im Bereich von 140°C bis 180°C, insbesondere im Bereich von 150°C bis 170°C, durchgeführt.

In einem zweiten Schritt (Schritt 2) erfolgt eine Bildung einer Imidazolin- und/oder Tetrahydropyrimidin-Einheit innerhalb des nach Schritt 1 erhaltenen Zwischenprodukts. In Schritt 2 erfolgt die Bildung einer Imidazolin-und/oder Tetrahydropyrimidin-Einheit durch Reaktion der wenigstens einen, ursprünglich in einer Komponente (a2) enthaltenen, sekundären Amino-Gruppe oder der zweiten, ursprünglich in einer Komponente (a2) enthaltenen, primären Amino-Gruppe mit dem Carbonyl-Kohlenstoffatom der in Schritt 1 aus einer Carbonsäure-Gruppe der Komponente (a1) und einer der primären Amino-Gruppen der gleichen Komponente (a2) gebildeten Amid-Bindung unter Wasser-Abspaltung und Ausbildung einer Imin-Bildung. Weist das in Schritt 1 eingesetzte Polyalkylenpolyamin (a2) eine Ethylen-Einheit als Alkylen-Einheit innerhalb seiner chemischen Struktur auf, welche eine in Schritt 1 umgesetzte primäre Amino-Gruppe mit der genannten sekundären oder primären Amino-Gruppe innerhalb der chemischen Struktur der Komponente (a2) verknüpft, so kommt es in Schritt 2 zur Ausbildung einer 5-gliedrigen Imin-haltigen Imidazolin-Einheit. Weist das in Schritt 1 eingesetzte Polyalkylenpolyamin (a2) eine Propylen-Einheit als Alkylen-Einheit innerhalb seiner chemischen Struktur auf, welche eine in Schritt 1 umgesetzte primäre Amino-Gruppen mit der genannten sekundären oder primären Amino-Gruppe innerhalb der chemischen Struktur der Komponente (a2) verknüpft, so kommt es in Schritt 2 zur Ausbildung einer 6-gliedrigen Imin-haltigen Tetrahydropyrimidin-Einheit. Dieser Schritt 2 wird vorzugsweise für jede in Schritt 1 gebildete Amid-Bindung wiederholt. Auf diese Weise werden beispielsweise in Schritt 1 bei Einsatz einer trimerisierten Fettsäure als Komponente (a1) unter Abspaltung von drei Molekülen Wasser und zweifacher Wiederholung des Schritts 1 insgesamt drei Amid-Bindungen durch Reaktion jeder der drei Carbonsäure-Gruppen der trimerisierten Fettsäure mit jeweils einer primären Amino-Gruppe jeweils eines Polyalkylenpolyamin-Moleküls gebildet. In Schritt 2 werden dann bei Einsatz dieses drei Amid-Gruppen aufweisenden und nach Schritt 1 erhaltenen Produkts unter Abspaltung von drei Molekülen Wasser und zweifacher Wiederholung des Schritts 2 insgesamt drei Imidazolin- und/oder Tetrahydropyrimidin-Einheiten durch Reaktion jeder Carbonyl-Gruppe der drei in Schritt 1 generierten Carbonsäureamid-Gruppen mit jeweils einer sekundären Amino-Gruppe jeweils eines ursprünglichen Polyalkylenpolyamin-Moleküls gebildet.

Vorzugsweise wird Schritt 2 bei Reaktionstemperaturen im Bereich von 160°C bis 250°C, besonders bevorzugt im Bereich von 170°C bis 240°C, ganz besonders bevorzugt im Bereich von 180°C bis 230°C, durchgeführt.

Die Kondensationsprodukte (A) können, je nach gewünschter Viskosität und Anwendungsgebiet, in Substanz oder mit geeigneten Lösemitteln, Lösemittelgemischen oder anderen geeigneten Trägermedien hergestellt und/oder nach Herstellung angelöst beziehungsweise formuliert werden. Geeignet sind alle Lösemittel oder Trägermedien, die unter den gewählten Reaktionsbedingungen nicht mit dem Kondensationsprodukt (A) oder den zu seiner Herstellung eingesetzten Komponenten (a1) und (a2) reaktiv sind oder deren Reaktivität gegenüber diesen Komponenten zu vernachlässigen ist und in denen die Komponenten (a1) und (a2) und die Kondensationsprodukte (A) zumindest teilweise löslich sind. Hierzu zählen beispielsweise Kohlenwasserstoffe wie Toluol, Xylol, Solvent Naphtha, aromatische, aliphatische und/oder cyloaliphatische Benzinfraktionen, cyclische und acyclische Ether wie Dioxan, Tetrahydrofuran, Polyalkylenglykoldialkylether wie Dipropylenglykoldimethylether, Alkohole wie Methoxypropanol, Dipropylenglykolmonomethylether, Polyalkylenglykole, Alkoxyalkylenglykole, 1,2-Propylenglykol, Butylglykol, Benzylalkohol, Ester von Mono-, Di- oder Polycarbonsäuren wie Ethylacetat, Butylacetat, Dimethyl-2-Methylglutarat, Phthalate oder andere Weichmacher, Di- oder Polycarbonsäureester, als "Dibasic Ester" bezeichnete Dialkylester von $C_2$-$C_4$-Dicarbonsäuren, Alkylglykolester wie Ethylglykolacetat, Methoxypropylacetat, Säureamide wie Dimethylformamid, N-Methylpyrrolidon und dergleichen. Zweckmäßig wählt man das oder die Lösemittel beziehungsweise Trägermedien bereits unter Berücksichtigung des geplanten Einsatzgebietes aus. Zum Beispiel werden für den Einsatz in aromatenfreien Lacksystemen bevorzugt aromatenfreie Lösemittel eingesetzt. Sollen die Produkte zum Beispiel dort eingesetzt werden, wo die Anwesenheit von VOC (volatile organic compounds) nicht erwünscht ist, sollte die Formulierung möglichst lösemittelfrei oder in entsprechend hochsiedenden Trägermedien vorliegen. Besonders geeignet zur Verwendung bei der Herstellung sind inerte Lösemittel, die durch Azeotropbildung die Entfernung des Reaktionswassers unterstützen, zum Beispiel aromatische Kohlenwasserstoffe wie Xylol oder Solvent Naphtha. Je nach Anwendungsgebiet können die zur Synthese verwendeten Lösemittel im Reaktionsgemisch verbleiben oder werden ganz oder teilweise entfernt und gegebenenfalls durch andere Lösemittel oder Trägermedien ersetzt werden. Die erfindungsgemäßen Kondensationsprodukte (A) können je nach Verträglichkeit auch mit Harzen, Harzlösungen, Reaktivverdünnern, Bindemitteln oder mit anderen nach dem Stand der Technik bekannten Additiven kombiniert werden, wie zum Beispiel Antiabsetzmitteln, oberflächenaktiven Additiven wie beispielsweise Silikonen und dergleichen.

Das Lösemittel kann zum Beispiel durch Abdestillieren, gegebenenfalls bei reduziertem Druck und/oder azeotrop unter Zusatz von Wasser, ganz oder teilweise entfernt werden. Das Kondensationsprodukt (A) kann auch durch Ausfällen mittels Zusatz von Nichtlösern wie aliphatischen Kohlenwasserstoffen, beispielsweise Hexan, anschließendes Abtrennen durch Filtration und gegebenenfalls Trocknen isoliert werden. Das nach einer dieser Methoden erhaltene Kondensationsprodukt (A) kann dann in einem für das jeweilige Anwendungsgebiet geeigneten Lösemittel angelöst werden oder gegebenenfalls in reiner Form beispielsweise bei Pulverlacken, eingesetzt werden. Gegebenenfalls kann das Lösemittel, in dem das Kondensationsprodukt (A) gelöst ist, nach Zusatz von geeigneten höher siedenden Lösemitteln, gegebenenfalls unter vermindertem Druck und/oder azeotrop unter Zusatz von Wasser, abdestilliert werden und dadurch das Kondensationsprodukt (A) in ein für das jeweilige Anwendungsgebiet geeignetes Trägermedium überführt werden.

Die Umsetzungen können in Gegenwart üblicher Katalysatoren, beispielsweise Sulfonsäuren wie para-Toluolsulfonsäure, Schwefelsäure, Trifluormethansulfonsäure oder Titansäureester durchgeführt werden.

In einer bevorzugten Ausführungsform enthält das Kondensationsprodukt (A) höchstens 30 oder höchstens 20 Gew.-%, vorzugsweise höchstens 15 Gew.-% oder höchstens 10 Gew.-%, besonders bevorzugt höchstens 6 Gew.-% oder höchstens 6 Gew.-%, ganz besonders bevorzugt höchstens 4 Gew.-% oder höchstens 3 Gew.-%, noch bevorzugter höchstens 2 Gew.-% oder höchstens 1 Gew.-%, insbesondere höchstens 0,5 Gew.-% oder höchstens 0,4 Gew.-%, insbesondere besonders bevorzugt höchstens 0,3 Gew.-% oder höchstens 0,2 Gew.-%, am meisten bevorzugt höchstens 0,1 Gew.-% an Amid-Bindungen (-NH-C(=O)-), jeweils bezogen auf das Gesamtgewicht des Kondensationsprodukts (A).

Durch die im Kondensationsprodukt (A) enthaltenen basischen Gruppen wie beispielsweise der darin enthaltenen Imidazolin- und/oder Tetrahydropyrimidin-Einheiten sind die erfindungsgemäße eingesetzten Kondensationsprodukte (A) zur Salzbildung befähigt. Sie können im Sinne der Erfindung daher auch in Form der entsprechenden Salze eingesetzt werden. Das erfindungsgemäß eingesetzte wenigstens eine Kondensationsprodukts (A) liegt daher in Form der freien Verbindung oder in Form eines Salzes wenigstens einer, vorzugsweise einer, Säure, vor. In manchen Fällen lässt sich durch eine solche teilweise oder vollständige Versalzung eine Verbesserung der Wirksamkeit und/oder eine verbesserte Löslichkeit, Verträglichkeit oder Lagerstabilität erzielen. Auch in Anwendungen, bei denen die Basizität der Produkte stört, zum Beispiel in sauer katalysierten Systemen, lassen sich häufig Verbesserungen durch teilweise oder vollständige Neutralisation erreichen.

Liegt das Kondensationsprodukt (A) in Form wenigstens eines Salzes vor, so werden diese Salze aus dem erhaltenen Kondensationsprodukt (A) durch Reaktion mit einer oder mehreren organischen oder anorganischen Säuren oder durch Quaternisierung mit geeigneten Verbindungen, die quartäre Stickstoffatome enthalten, erhalten. Die einzusetzende Säuremenge richtet sich dabei nach dem Einsatzgebiet. Je nach Einzelfall können die Säurekomponenten äquimolar, im Unterschuss oder im Überschuss eingesetzt werden. Zweckmäßig wird maximal äquimolar und bevorzugt im Säureunterschuss neutralisiert, besonders bevorzugt werden maximal 50% der im Kondensationsprodukt (A) enthaltenen vorzugsweise tertiären Aminogruppen und insbesondere maximal 20% der vorzugsweise tertiären Aminogruppen neutralisiert. Ganz besonders bevorzugte Kondensationsprodukte (A) werden gar nicht neutralisiert. Die zur Salzbildung einzusetzenden Säuren können gesättigt oder ungesättigt, linear, verzweigt, (hetero)cycloaliphatisch und/ oder (hetero)aromatisch sein. Bevorzugt sind Salze mit organischen Carbonsäuren oder sauren Phosphorsäurestern. Beispiele für solche sauren Phosphorsäureester sind aufgeführt in EP 0 893 155 A2, EP 0 417 490 A2 und US 5,143,952 A. Monofunktionelle Carbonsäuren sind bevorzugt. Besonders bevorzugt sind Monocarbonsäuren mit 12 bis 22 C-Atomen, besonders bevorzugt mit 16-20 C-Atomen. Beispiele für Carbonsäuren sind aliphatische und/oder aromatische Carbonsäuren wie kurz- oder langkettige Fettsäuren, Essigsäure, Neodecansäure, Laurinsäure, Ölsäure, Tallölfettsäure, Stearinsäure, 12-Hydroxystearinsäure, Rizinolsäure, natürliche gesättigte oder ungesättigte pflanzliche oder tierische Fettsäuren, Bishydroxypropionsäure, Dodecenylbernsteinsaure, Adipinsäure, Benzoesäure.

Das zahlenmittlere Molekulargewicht $M_n$ des Kondensationsproduktes (A) liegt vorzugsweise bei mindestens 500 g/mol, besonders bevorzugt bei mindestens 700 g/mol, ganz besonders bevorzugt bei mindestens 850 g/mol und

idealerweise bei mindestens 1000 g/mol. Das maximale zahlenmittlere Molekulargewicht $M_n$ liegt bei bevorzugt 10000 g/mol, besonders bevorzugt 6000 g/mol und ganz besonders bevorzugt bei 4000 g/mol. Das zahlenmittlere Molekulargewicht $M_n$ wird mittels Gelpermeations-Chromatographie (GPC) gegen einen Polystyrolstandard bestimmt, vorzugsweise mit THF als Eluenten.

In einer bevorzugten Ausführungsform ist das wenigstes eine Kondensationsprodukt (A) eine Verbindung der allgemeinen Formel (II)

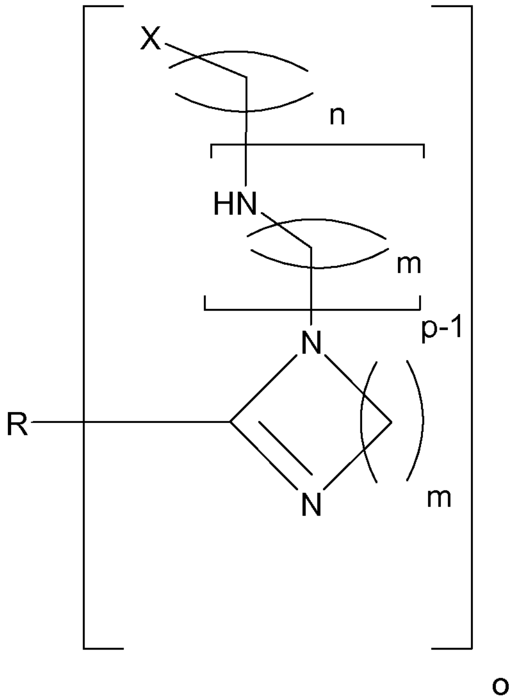

(II),

worin

m für 2 oder 3 steht,

n für 0, 1, 2, 3 oder 4 steht, vorzugsweise für 1, 2, 3 oder 4, ganz besonders bevorzugt für 1, 2 oder 3, insbesondere für 2 oder 3, am meisten bevorzugt für 2 steht,

p für 1, 2, 3 oder 4, vorzugsweise für 1, 2 oder 3, ganz besonders bevorzugt für 1 oder 2, insbesondere für 2 steht,

X für H steht, wenn n 0 bedeutet oder

X für $NH_2$ oder OH steht, wenn n für 1, 2, 3 oder 4 steht,

o für 2, 3, 4, 5 oder 6, vorzugsweise für 2 oder 3 steht, und

R für einen $C_{30}$-$C_{95}$-aliphatischen Rest steht, der gegebenenfalls wenigstens einfach ungesättigt sein kann,

oder R für einen Rest der allgemeinen Formel (III)

$$(C_{30}\text{-}C_{95}\text{-aliphatischer Rest})\text{-}C(=O)\text{-}NH\text{-}Z\text{-}NH\text{-}C(=O)\text{-}(C_{30}\text{-}C_{95}\text{-aliphatischer Rest}) \qquad \text{(III)},$$

steht, worin

Z ausgewählt ist aus der Gruppe bestehend aus -$C_{1-10}$-Alkylen-, -(Hetero)cycloaliphat-, -Aryl-, -Heteroaryl-, -$C_{1-10}$-Alkylen-(Hetero)cycloaliphat-$C_{1-10}$-Alkylen-, -$C_{1-10}$-Alkylen-Aryl- $C_{1-10}$-Alkylen-und -$C_{1-10}$-Alkylen-Heteroaryl-

$C_{1-10}$-Alkylen-,
und

wobei der $C_{30}$-$C_{95}$-aliphatische Rest gegebenenfalls jeweils wenigstens einfach ungesättigt sein kann.

Dabei sind o Einheiten, d.h. 2, 3, 4, 5 oder 6 Einheiten, der Teilstruktur (III-T)

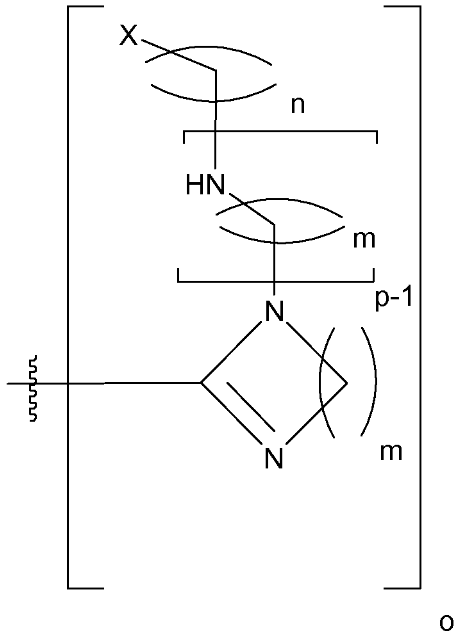

(III-T)

mit dem Rest R verknüpft, d.h. an 2, 3, 4, 5 oder 6 Positionen innerhalb des Restes R an diesen gebunden.

Steht R für einen Rest der allgemeinen Formel (III), so erfolgt die Bindung der Teilstruktur (III-T) an diesen Rest immer über die in der Formel (III) enthaltenen $C_{30}$-$C_{95}$-aliphatischen Reste.

Die Bedeutung des Parameters "o" ist davon abhängig, was für eine polymerisierte Fettsäure als Komponente (a1) oder was für ein Umsetzungsprodukt (U) zur Herstellung des Kondensationsprodukts (A) eingesetzt worden ist. Der Rest R steht für den Rest der jeweiligen eingesetzten wenigstens einen polymerisierten Fettsäure oder des jeweiligen eingesetzten Umsetzungsprodukts (U), deren bzw. dessen freie Carbonsäure-Gruppen zur Herstellung des Kondensationsprodukts (A) mit der wenigstens einen primären Amino-Gruppe der eingesetzten Komponente (a2) unter Amid-Bildung und anschließenden Ringschluss zum Kondensationsprodukt (A) der Formel (II) reagiert haben.

Ist beispielsweise eine dimerisierte Fettsäure eingesetzt worden, so hat der Parameter o die Bedeutung o = 2. Ist beispielsweise eine trimerisierte Fettsäure eingesetzt worden, so hat der Parameter o die Bedeutung o = 3. Ist beispielsweise ein Umsetzungsprodukt (U) aus zwei dimerisierten Fettsäuren und einem Polyamin mit wenigstens zwei primären Amino-Gruppen eingesetzt worden, so hat der Parameter o die Bedeutung o = 2. Ist beispielsweise ein Umsetzungsprodukt (U) aus einer dimerisierten Fettsäure, einer trimerisierten Fettsäure und einem Polyamin mit wenigstens zwei primären Amino-Gruppen eingesetzt worden, so hat der Parameter o die Bedeutung o = 3. Ist beispielsweise ein Umsetzungsprodukt (U) aus zwei trimerisierten Fettsäuren und einem Polyamin mit wenigstens zwei primären Amino-Gruppen eingesetzt worden, so hat der Parameter o die Bedeutung o = 4.

Vorzugsweise steht
der Rest R für einen $C_{30}$-$C_{38}$-aliphatischen Rest steht, der gegebenenfalls wenigstens einfach ungesättigt sein kann, und der Parameter o steht für 2
oder
der Rest R steht für einen $C_{45}$-$C_{57}$-aliphatischen Rest, der gegebenenfalls wenigstens einfach ungesättigt sein kann, und der Parameter o steht für 3,
oder
der Rest R steht für eine Verbindung der allgemeinen Formel (IIIa)

($C_{30}$-$C_{38}$-aliphatischer Rest)-C(=O)-NH-Z-NH-C(=O)-($C_{30}$-$C_{38}$-aliphatischen Rest) (IIIa),

und der Parameter o steht für 2,
oder
der Rest R steht für eine Verbindung der allgemeinen Formel (III)

($C_{30}$-$C_{38}$-aliphatischer Rest)-C(=O)-NH-Z-NH-C(=O)-($C_{45}$-$C_{57}$-aliphatischer Rest) (IIIb),

und der Parameter o steht für 3,
oder
der Rest R steht für eine Verbindung der allgemeinen Formel (III)

($C_{45}$-$C_{57}$-aliphatischer Rest)-C(=O)-NH-Z-NH-C(=O)-($C_{45}$-$C_{57}$-aliphatischer Rest) (IIIc),

und der Parameter o steht für 4,
wobei

Z jeweils ausgewählt ist aus der Gruppe bestehend aus -$C_{1-10}$-Alkylen-, -(Hetero)cycloaliphat-, -Aryl-, -Heteroaryl-, -$C_{1-10}$-Alkylen-(Hetero)cycloaliphat-$C_{1-10}$-Alkylen-, -$C_{1-10}$-Alkylen-Aryl- $C_{1-10}$-Alkylen-und -$C_{1-10}$-Alkylen-Heteroaryl- $C_{1-10}$-Alkylen-,
und

wobei der $C_{30}$-$C_{95}$-aliphatische Rest, der $C_{45}$-$C_{57}$-aliphatische Rest und der $C_{30}$-$C_{38}$-aliphatische Rest gegebenenfalls jeweils wenigstens einfach ungesättigt sein kann.

Im Rahmen der vorliegenden Erfindung bezeichnet das in Formeln verwendete Symbol

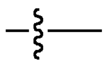

eine Verknüpfung eines entsprechenden Restes an die jeweilige übergeordnete allgemeine Struktur.

Die Verwendung des wenigstens einen Kondensationsprodukts (A) als Thixotropie-verstärkendes Additiv erfolgt vorzugsweise in Kombination mit wenigstens einem Thixotropiermittel (B), gegebenenfalls zusätzlich in Kombination mit wenigstens einem Bindemittel (C) und gegebenenfalls in Kombination mit wenigstens einem Härter (D). Eine solche Verwendung des wenigstens einen Kondensationsprodukts (A) als Thixotropie-verstärkendes Additiv erfolgt dabei vorzugsweise in der Art und Weise, dass das Kondensationsprodukt (A) als Thixotropie-verstärkendes Additiv in Zusammensetzungen eingesetzt wird, die zudem wenigstens ein Thixotropiermittel (B) und gegebenenfalls wenigstens ein Bindemittel (C) und gegebenenfalls wenigstens einen Härter (D) umfassen.

**Zusammensetzung**

Ein weiterer Gegenstand der vorliegenden Erfindung ist daher eine Zusammensetzung umfassend

(A) wenigstens ein Kondensationsprodukt in Form der freien Verbindung oder in Form eines Salzes als Thixotropie-verstärkendes Additiv, welches erhältlich ist durch Umsetzung

(a1) wenigstens einer polymerisierten Fettsäure oder wenigstens eines Umsetzungsprodukts (U) von wenigstens zwei polymerisierten Fettsäuren und wenigstens einem wenigstens zwei primäre Amino-Gruppen aufweisenden Polyamin,
mit

(a2) wenigstens einem zur Ausbildung wenigstens einer Imidazolin- und/oder Tetrahydropyrimidin-Einheit befähigten Polyalkylenpolyamin, welches wenigstens zwei primäre Amino-Gruppen oder wenigstens eine primäre und wenigstens eine sekundäre Amino-Gruppe aufweist,
und

(B) wenigstens ein Thixotropiermittel,
und

(C) gegebenenfalls wenigstens ein Bindemittel und

(D) gegebenenfalls wenigstens einen Härter.

Der Begriff "umfassend" im Sinne der vorliegenden Erfindung, wie beispielsweise im Zusammenhang mit der erfindungsgemäßen Zusammensetzung, hat in einer bevorzugten Ausführungsform die Bedeutung "bestehend aus".

Vorzugsweise addieren sich die Anteile in Gew.-% der in der erfindungsgemäßen Zusammensetzung enthaltenen Komponenten (A), (B) und gegebenenfalls (C) und gegebenenfalls (D) sowie gegebenenfalls darin vorhandener weiterer Additive (E) auf insgesamt 100 Gew.-%, bezogen auf das Gesamtgewicht der Zusammensetzung.

Alle im Zusammenhang mit dem Kondensationsprodukt (A) bzw. dessen Verwendung als Thixotropie-verstärkendes Additiv in den hierin vorstehend beschriebenen bevorzugten Ausführungsformen sind auch bevorzugte Ausführungsformen des Kondensationsprodukts (A) als Bestandteil der erfindungsgemäßen Zusammensetzung.

In einer bevorzugten Ausführungsform der vorliegenden Erfindung wird das Thixotropie-verstärkende Additiv (A) nicht als Härter in der erfindungsgemäßen Zusammensetzung eingesetzt.

Vorzugsweise ist das Thixotropie-verstärkende Additiv (A) in der erfindungsgemäßen Zusammensetzung in einer Menge in einem Bereich von 10 bis 100 Gew.-% oder 10 bis 80 Gew.-%, vorzugsweise in einem Bereich von 15 bis 90 Gew.-% oder 15 bis 80 Gew.-%, besonders bevorzugt in einem Bereich von 20 bis 80 Gew.-%, jeweils bezogen auf das Gesamtgewicht des Thixotropiermittels (B), enthalten.

Vorzugsweise ist das Thixotropie-verstärkende Additiv (A) in der erfindungsgemäßen Zusammensetzung, die zudem wenigstens ein Bindemittel (C) enthält, in einer Menge in einem Bereich von 0,1 bis 20,0 Gew.-%, noch bevorzugter in einem Bereich von 0,2 bis 18,0 Gew.-%, besonders bevorzugt in einem Bereich von 0,25 bis 16 Gew.-%, ganz besonders bevorzugt in einem Bereich von 0,30 bis 14 Gew.-%, insbesondere in einem Bereich von 0,35 bis 12 Gew.-%, am meisten bevorzugt in einem Bereich von 0,40 bis 8 Gew.-%, jeweils bezogen auf das Gesamtgewicht des Bindemittels (C), enthalten.

In einer bevorzugten Ausführungsform ist das erfindungsgemäß eingesetzte Thixotropiermittel (B) ein organisches oder anorganisches Thixotropiermittel (B). Organische Thixotropiermittel (B) eignen sich vorzugsweise als Thixotropiermittel in nicht-wässrigen Zusammensetzungen, wohingegen sich anorganische Thixotropiermittel vorzugsweise für den Einsatz in wässrigen Zusammensetzungen eignen. Vorzugsweise ist das erfindungsgemäß eingesetzte Thixotropiermittel (B) ein anorganisches Thixotropiermittel (B).

Vorzugsweise ist das Thixotropiermittel (B) ausgewählt aus der Gruppe bestehend aus gegebenenfalls modifizierten Schichtsilikaten, insbesondere gegebenenfalls modifizierten Organoschichtsilikaten wie Bentonit, und Kieselsäuren wie amorphen Kieselsäuren, insbesondere gefällten Kieselsäuren und pyrogenen Kieselsäuren. Gefällte Kieselsäuren werden nasschemisch durch Ausfällung erhalten, während pyrogene Kieselsäuren durch kontinuierliche Flammenhydrolyse erhalten werden.

Als besonders bevorzugtes erfindungsgemäß eingesetztes Thixotropiermittel (B) werden amorphe Kieselsäuren, insbesondere pyrogene Kieselsäuren eingesetzt. Im Gegensatz zu den nasschemisch gewonnenen Kieselsäuren, welche zumeist sehr hohe innere Oberflächen besitzen, bestehen flammenhydrolytisch gewonnene Kieselsäuren aus nahezu kugelförmigen Primärteilchen mit Teilchendurchmessern von typischerweise 7 bis 40 nm. Die spezifischen Oberflächen liegen vorzugsweise in einem Bereich von 50 bis 400 $m^2/g$, vorzugsweise in einem Bereich von 50 bis 380 $m^2/g$ (Schriftreihe Pigmente, Nummer 54, der Firma Degussa). Sie weisen im Wesentlichen nur eine äußere Oberfläche auf. Diese Oberfläche ist teilweise mit Siloxan-Gruppen, teilweise mit Silanol-Gruppen besetzt. Der hohe Anteil freier Silanol-Gruppen verleiht unbehandelter pyrogener Kieselsäure einen hydrophilen Charakter. Die Silanol-Gruppen sind zum reversiblen Aufbau eines Kieselsäure-Netztwerks über die Ausbildung von Wasserstoffbrückenbindungen befähigt, wodurch es zu einer Thixotropierwirkung kommen kann. Es ist jedoch auch möglich, wenngleich kostspieliger, die hydrophile Oberfläche pyrogener Kieselsäuren organisch nachzubehandeln, beispielsweise mit Silanen wie Dimethyldichlorsilan, Trimethoxyoctylsilan oder Hexamethyldisilazan, wobei der überwiegende Teil der Silanol-Gruppen durch organische Gruppen abgesättigt wird und somit die hydrophile Kieselsäure hydrophobiert wird. Die pyrogenen Kieselsäuren können somit in Form nicht-organisch modifizierter pyrogener Kieselsäuren (hydrophiler Kieselsäuren) oder hydrophob modifizierter pyrogener Kieselsäuren vorliegen oder in Form einer Mischung dieser Kieselsäuren, wobei die nicht-organisch modifizierten pyrogenen Kieselsäuren (hydrophilen Kieselsäuren) besonders bevorzugt sind.

In einer bevorzugten Ausführungsform ist das Thixotropiermittel (B) ausgewählt ist aus der Gruppe bestehend aus nicht-organisch modifizierter pyrogener Kieselsäure, hydrophob modifizierter pyrogener Kieselsäure und Mischungen davon. Der Ausdruck "hydrophob modifizierte pyrogene Kieselsäure", d.h. mittels einer Hydrophobierung modifizierter pyrogener Kieselsäure, ist dem Fachmann bekannt, beispielsweise aus "Additive kompakt" von Bodo Müller, Vincentz Verlag 2009, Seiten 35 und 36.

Die erfindungsgemäße Zusammensetzung ist vorzugsweise eine nicht-wässrige Zusammensetzung. Unter dem Begriff "nicht-wässrig" im Zusammenhang mit der erfindungsgemäßen Zusammensetzung werden vorzugsweise solche Zusammensetzungen verstanden, die im Wesentlichen wasserfrei sind, d.h. die höchstens 1,0 Gew.-%, besonders bevorzugt höchstens 0,5 Gew.-%, ganz besonders bevorzugt höchstens 0,1 Gew.-%, jeweils bezogen auf das Gesamtgewicht der Zusammensetzung, an Wasser enthalten.

Die erfindungsgemäße Zusammensetzung ist vorzugsweise lösemittelfrei oder kann gegebenenfalls organische Lösemittel enthalten, beispielsweise um eine gewünschte Viskosität einzustellen. Vorzugsweise beträgt der Anteil dieser organischen Lösungsmittel höchstens 40,0 Gew.-%, besonders bevorzugt höchstens 30,0 Gew.-%, ganz besonders bevorzugt höchstens 20,0 Gew.-%, jeweils bezogen auf das Gesamtgewicht der erfindungsgemäßen Zusammensetzung.

In einer bevorzugten Ausführungsform umfasst die erfindungsgemäße Zusammensetzung neben den Komponenten (A) und (B) zudem wenigstens ein Bindemittel (C) und gegebenenfalls wenigstens einen Härter (D).

Vorzugsweise ist das Thixotropiermittel (B) in der erfindungsgemäßen Zusammensetzung, die zudem wenigstens ein Bindemittel (C) enthält, in einer Menge in einem Bereich von 0,5 bis 25 Gew.-%, vorzugsweise in einem Bereich von 1,0 bis 22,5 Gew.-%, besonders bevorzugt in einem Bereich von 1,25 bis 20,0 Gew.-%, ganz besonders bevorzugt in einem Bereich von 1,5 bis 17,5 Gew.-%, insbesondere bevorzugt in einem Bereich von 1,75 bis 15,0 Gew.-%, am meisten bevorzugt in einem Bereich von 2,0 bis 10,0 Gew.-%, jeweils bezogen auf das Gesamtgewicht des Bindemittels (C), enthalten.

Alle üblichen dem Fachmann bekannten Bindemittel eignen sich als BindemittelKomponente (C) der erfindungsgemäßen Zusammensetzung. Das Bindemittel kann in einem Verdünnungsmittel wie wenigstens einem organischen Lösemittel und/oder Wasser, vorzugsweise in Wasser, gelöst oder dispergiert vorliegen.

Das erfindungsgemäß eingesetzte Bindemittel (C) weist vorzugsweise vernetzbare funktionelle Gruppen auf. Jede übliche dem Fachmann bekannte vernetzbare funktionelle Gruppe kommt dabei in Betracht. Insbesondere sind die vernetzbaren funktionellen Gruppen ausgewählt aus der Gruppe bestehend aus HydroxylGruppen, Amino-Gruppen, Carbonsäure-Gruppen und ungesättigten KohlenstoffDoppelbindungen, Isocyanaten, Polyisocyanaten und Epoxiden wie Ethylenoxiden. Das Bindemittel (C) ist exotherm oder endotherm vernetzbar bzw. härtbar. Vorzugsweise ist das Bindemittel (C) in einem Temperaturbereich von -20°C bis zu 250°C vernetzbar bzw. härtbar. Vorzugsweise ist das Bindemittel (C) Temperaturen bei Raumtemperatur oder bei Temperaturen im Bereich von 15°C bis 80°C vernetzbar.

Vorzugsweise ist das Bindemittel (C) ausgewählt ist aus der Gruppe bestehend aus Epoxid-basierten Harzen, Polyester-basierten Harzen, wobei die Polyester vorzugsweise ungesättigt sind, Vinylester-basierten Harzen, Poly(meth)acrylat-basierten Harzen, Harzen auf Basis wenigstens eines (Meth)acrylat-Copolymers und Polyurethan-basierten Harzen. Diese Harze sowie ihre Herstellung sind dem Fachmann bekannt.

Werden als Bindemittel (C) Epoxid-basierte Harze eingesetzt, so eignen sich beispielsweise die in EP 0 835 910 A1 offenbarten Epoxid-basierten Harze als Bindemittel (C). Vorzugsweise werden als Bindemittel (C) Epoxid-basierte Harze eingesetzt, die aus Glycidylethern hergestellt werden, welch endständige Epoxidgruppen und innerhalb des Moleküls Hydroxylgruppen als funktionelle Gruppen aufweisen. Vorzugsweis sind dies Umsetzungsprodukte von Bisphenol A und Epichlorhydrin bzw. Bisphenol F mit Epichlorhydrin und Mischungen davon. Die Härtung bzw. Vernetzung derartiger Epoxid-basierter Harze erfolgt üblicherweise durch eine Polymerisation der Epoxidgruppen des Epoxidringes, durch eine Polyadditionsreaktion in Form einer Anlagerung anderer reaktiver Verbindungen als Härter (D) in stöchiometrischen Mengen an die Epoxidgruppen, wobei dementsprechend pro Epoxidgruppe die Gegenwart eines aktiven Wasserstoffäquivalents erforderlich ist (d.h. pro Epoxid-Äquivalent zur Aushärtung ein H-aktives-Äquivalent benötigt wird), oder durch eine Polykondensation über die Epoxid- und die Hydroxylgruppen. Geeignete Härter (D) sind beispielsweise Polyamine, insbesondere (hetero)aliphatische, (hetero)aromatische und (hetero) cycloaliphatische Polyamine, Polyamidoamine, Polyaminoamide sowie Polycarbonsäuren und ihre Anhydride. Als Polyamine eignen sich alle Polyamine welche auch zur Herstellung des Umsetzungsprodukts (U) eingesetzt werden, welches wiederum als Komponente (a1) zur Herstellung des Kondensationsprodukts (A) eingesetzt werden kann. Werden als Härter (D) Polyamine eingesetzt, so eignen sich beispielsweise und insbesondere die in EP 0 835 910 A1 offenbarten Polyamine als Härter (D).

Werden als Bindemittel (C) Polyester-basierte Harze eingesetzt, so eignen sich insbesondere solche Polyester, die sich von Polyolen wie z.B. Ethylenglkcol oder 1,4-Butandiol und gegebenenfalls wenigstens einfach ungesättigter Dicarbonsäuren oder Dicarbonsäure-Derivaten wie Adipinsäure, und/oder Terephthalsäure ableiten. Polyester-basierte Harze, insbesondere ungesättigte Polyester-basierte Harze sind dabei üblicherweise aus verschiedenen Kombinationen von gesättigten und ungesättigten Dicarbonsäuren, Dialkoholen und gegebenenfalls geeigneten Monomeren erhältlich. Die Reaktivität von Polyester-basierten Harzen wird hauptsächlich über die Anzahl der reaktiven ungesättigten C-C Doppelbindungen der eingesetzten Dicarbonsäure oder des eingesetzten Dicarbonsäurederivats (z.B. Maleinsäure, Maleinsäureanhydrid und Fumarsäure) bestimmt, wobei ein Anteil an gesättigten Dicarbonsäuren (z.B. Orthophtalsäure, Phthalsäureanhydrid, Isophthalsäure etc.) beispielsweise die Löslichkeit in Styrol sowie einige spätere mechanische Eigenschaften des Endproduktes beeinflussen kann. Geeignete Härter (D) zur Aushärtung von Polyester-basierten Harze, insbesondere ungesättigten Polyester-basierte Harze sind beispielsweise Verbindungen, die eine radikalische Polymerisation als Aushärtungsreaktion ermöglichen, welche z.B. durch die Zersetzung organischer Peroxide initiiert wird. Die Zersetzung der Peroxide erfolgt über Temperatur oder die Anwesenheit von Beschleunigern wie mtallischen Salze wie z.B. Kobaltoctoat. Da es sich um eine radikalische Polymerisation handelt, bedarf es keiner stöchiometrischen

Auslegung der Polyester-basierten Harze und dem zu verwendenden Härter (D), d.h. die Härter-Komponente (D) kann in nur geringen, vorzugsweise katalytischen Mengen eingesetzt werden.

Werden als Bindemittel (C) Vinylester-basierte Harzen eingesetzt, so eignen sich insbesondere solche Vinylester-basierten Harzen, die sich bei Reaktion eines Epoxid-basierten Harzes mit wenigstens einer ungesättigten Monocarbonsäure erhalten lassen. Solche Harze zeichnen sich durch die Gegenwart wenigstens einer endständig positionierten C-C-Doppelbindung aus. Die Aushärtung solcher Vinylester-basierter Harze kann durch eine radikalische Polymerisation erfolgen, die beispielsweise durch die Zersetzung organischer Peroxide initiiert wird. Die Zersetzung der Peroxide erfolgt über Temperatur oder die Anwesenheit von Beschleunigern wie mtallischen Salze wie z.B. Kobaltoctoat. Da es sich um eine radikalische Polymerisation handelt, bedarf es keiner stöchiometrischen Auslegung der Vinylester-basierten Harze und dem zu verwendenden Härter (D), d.h. die Härter-Komponente (D) kann in nur geringen, vorzugsweise katalytischen Mengen eingesetzt werden.

Werden als Bindemittel (C) Poly(meth)acrylat-basierte Harzen und/oder Harze auf Basis wenigstens eines (Meth)acrylat-Copolymers eingesetzt, so eignen sich zu deren Herstellung insbesondere Monomer- oder Oligomer-Gemischen von Estern der Acrylsäure und der Methacrylsäure. Der Polymeraufbau erfolgt über die Umsetzung der C-C-Doppelbindungen dieser Monomere. Die Aushärtung solcher Poly(meth)acrylat-basierte Harzen und/oder Harze auf Basis wenigstens eines (Meth)acrylat-Copolymers kann durch eine radikalische Polymerisation erfolgen, die beispielsweise durch die Zersetzung organischer Peroxide initiiert wird. Die Zersetzung der Peroxide erfolgt über Temperatur oder die Anwesenheit von Beschleunigern wie metallischen Salzen wie z.B. Kupferoctoat oder Aminen wie z.B. N,N-Dimethyl-p-toluidin. Da es sich um eine radikalische Polymerisation handelt, bedarf es keiner stöchiometrischen Auslegung der Poly(meth)acrylat-basierten Harzen und/oder Harze auf Basis wenigstens eines (Meth)acrylat-Copolymers und dem zu verwendenden Härter (D), d.h. die Härter-Komponente (D) kann in nur geringen, vorzugsweise katalytischen Mengen eingesetzt werden.

Werden als Bindemittel (C) Polyurethan-basierte Harze eingesetzt, so eignen sich insbesondere solche Polyurethan-basierte Harze, die durch eine Polyadditionsreaktion zwischen hydroxylgruppenhaltigen Verbindungen wie Polyolen (wie z.B. Hydroxylgruppen von Polyestern oder hydroxylgruppenhaltigen Polyethern sowie Mischungen davon) und wenigstens einem Polyisocyanat (aromatische und aliphatische Isocyanate oder Di- und Polyisocyanate). Dabei ist üblicherweise ein stöchiometrischer Umsatz der OH-Gruppen der Polyole mit den NCO-Gruppen der Polyisocyanate erforderlich. Jedoch kann das einzusetzende stöchiometrische Verhältnis auch variiert werden, da das Polyisocyanat in solchen Mengen zu der Polyol-Komponente gegeben werden kann, dass es zu einer "Übervernetzung" oder zu einer "Untervernetzung" kommen kann.

Vorzugsweise enthält die erfindungsgemäße Zusammensetzung das Bindemittel (C) in einer Menge von 20 bis 99 Gew.-%, vorzugsweise in einer Menge von 25 bis 95 Gew.-%, besonders bevorzugt in einer Menge von 30 bis 90 Gew.-%, bezogen auf das Gesamtgewicht des Bindemittels (C) und des gegebenenfalls vorhandenen Härters (D).

In einer weiteren bevorzugten Ausführungsform enthält die erfindungsgemäße Zusammensetzung das Bindemittel (C) in einer Menge von 25 bis 99 Gew.-%, vorzugsweise in einer Menge von 30 bis 99 Gew.-%, besonders bevorzugt in einer Menge von 35 bis 95 Gew.-%, bezogen auf das Gesamtgewicht der Zusammensetzung.

Enthält die erfindungsgemäße Zusammensetzung wenigstens einen Härter (D), so ist dieser vorzugsweise zur Vernetzung geeignet. Solche Härter sind dem Fachmann bekannt. Zur Beschleunigung der Vernetzung können der Zusammensetzung geeignete Katalysatoren zugesetzt werden. Alle dem Fachmann bekannten üblichen Härter (D) können zur Herstellung der erfindungsgemäßen Zusammensetzung eingesetzt werden.

Vorzugsweise enthält die erfindungsgemäße Zusammensetzung den Härter (D) in einer Menge von 2 bis 100 Gew.-%, vorzugsweise in einer Menge von 2 bis 80 Gew.-%, besonders bevorzugt in einer Menge von 2 bis 50 Gew.-%, jeweils bezogen auf das Gesamtgewicht des Bindemittels (C).

Vorzugsweise enthält die erfindungsgemäße Zusammensetzung den Härter (D) in einer Menge von 1 bis 20 Gew.-%, vorzugsweise in einer Menge von 2 bis 15 Gew.-%, besonders bevorzugt in einer Menge von 3 bis 10 Gew.-%, bezogen auf das Gesamtgewicht der Zusammensetzung.

In einer bevorzugten Ausführungsform umfasst die erfindungsgemäße Zusammensetzung

wenigstens ein Bindemittel (C), vorzugsweise in einer Menge in einem Bereich von 30 bis 99 Gew.-%, bezogen auf das Gesamtgewicht der Zusammensetzung,

das Thixotropiermittel (B) in einer Menge in einem Bereich von 0,5 bis 25 Gew.-%, vorzugsweise in einem Bereich von 1,0 bis 22,5 Gew.-%, besonders bevorzugt in einem Bereich von 1,25 bis 20,0 Gew.-%, ganz besonders bevorzugt in einem Bereich von 1,5 bis 17,5 Gew.-%, insbesondere bevorzugt in einem Bereich von 1,75 bis 15,0 Gew.-%, am meisten bevorzugt in einem Bereich von 2,0 bis 10,0 Gew.-%, jeweils bezogen auf das Gesamtgewicht des Bindemittels (C),

das Thixotropie-verstärkende Additiv (A) in einer Menge in einem Bereich von 10 bis 100 Gew.-%, vorzugsweise

in einem Bereich von 15 bis 90 Gew.-%, besonders bevorzugt in einem Bereich von 20 bis 80 Gew.-%, jeweils bezogen auf das Gesamtgewicht des Thixotropiermittels (B),
oder

das Thixotropie-verstärkende Additiv (A) in einer Menge in einem Bereich von 0,1 bis 20,0 Gew.-%, noch bevorzugter in einem Bereich von 0,2 bis 18,0 Gew.-%, besonders bevorzugt in einem Bereich von 0,25 bis 16 Gew.-%, ganz besonders bevorzugt in einem Bereich von 0,30 bis 14 Gew.-%, insbesondere in einem Bereich von 0,35 bis 12 Gew.-%, am meisten bevorzugt in einem Bereich von 0,40 bis 8 Gew.-%, jeweils bezogen auf das Gesamtgewicht des Bindemittels (C),
und

gegebenenfalls wenigstens einen Härter (D), vorzugsweise in einer Menge in einem Bereich von 2 bis 100 Gew-%, vorzugsweise in einem Bereich von 2 bis 50 Gew-%bezogen auf das Gesamtgewicht des Bindemittels (C).

Die erfindungsgemäße Zusammensetzung kann je nach erwünschter Anwendung ein oder mehrere üblicherweise eingesetzte Additive als Komponente (E) enthalten. Vorzugsweise sind diese Additive ausgewählt aus der Gruppe bestehend aus Emulgatoren, Verlaufshilfsmitteln, Löslichkeitsvermittlern, Entschäumungsmitteln, Stabilisierungsmitteln, vorzugsweise Hitze-Stabilisatoren, Prozess-Stabilisatoren und UV- und/oder Licht-Stabilisatoren, Katalysatoren, Wachsen, Flexibilisierungsmitteln, Flammschutzmitteln, Lösemittel, Reaktivverdünner, Trägermedien, Harze, Haftvermittlern, organische und/oder anorganische Nanopartikel, welche eine Teilchengröße < 100 nm aufweisen, wie Ruß, Metalloxide und/oder Halbmetalloxide, Prozesshilfsmitteln, Weichmachern, pulver- und faserförmige Feststoffe, vorzugsweise pulver- und faserförmige Feststoffe ausgewählt aus der Gruppe bestehend aus Füllstoffen, Glasfasern, Verstärkern und Pigmenten, und Gemischen aus den vorstehend genannten Additiven (E).

Der Additiv-Gehalt (E) in der erfindungsgemäßen Zusammensetzung kann je nach Verwendungszweck sehr breit variieren. Vorzugsweise liegt der Gehalt, bezogen auf das Gesamtgewicht der erfindungsgemäßen Zusammensetzung bei 0,1 bis 10,0 Gew.-%, bevorzugt bei 0,1 bis 8,0 Gew.-%, besonders bevorzugt bei 0,1 bis 6,0 Gew.-%, ganz besonders bevorzugt bei 0,1 bis 4,0 Gew.-% und insbesondere bei 0,1 bis 2,0 Gew.-%.

Die erfindungsgemäße Zusammensetzung kann als ein Ein-Komponenten-System umfassend wenigstens eine Kondensationsprodukt (A), wenigstens ein Thixotropiermittel (B), wenigstens eine Bindemittel (C), wenigstens einen Härter (D) und gegebenenfalls wenigstens eine weiteres Additiv (E) bereitgestellt werden. Die erfindungsgemäße Zusammensetzung kann aber auch als ein Zwei-Komponenten-System umfassend wenigstens eine Kondensationsprodukt (A), wenigstens ein Thixotropiermittel (B), wenigstens eine Bindemittel (C) und gegebenenfalls wenigstens eine weiteres Additiv (E) bereitgestellt werden (Stammkomponente). Der Härter (D) als Härterkomponente kann innerhalb eines solchen ZweiKomponentensystems separat von der ersten Komponente zur Verfügung gestellt sein. Unter Zwei-Komponenten-Systemen werden daher solche Systeme verstanden, bei denen die chemische Reaktion, die zur Härtung führt, durch Mischen von zwei Komponenten (Stammkomponente und Härterkomponente), im zur Härtung erforderlichen Verhältnis, eingeleitet wird. Die einzelnen Komponenten sind hierbei üblicherweise selbst keine Klebstoffe, Dichtstoffe, Lacke, Beschichtungsmittel, Klebeharze, Gießharze, Kunstmarmor, Fußbodenbeläge, Polymerbeton oder Faserverbundmaterialien, da sie entweder nicht zur Vernetzung und/oder Filmbildung befähigt sind oder keine beständigen Werkstoffe, Filme oder Verklebungen ergeben. Die Zuführung des Kondensationsprodukt (A) in die erfindungsgemäßen Zusammensetzungen, die vorzugsweise wenigstens ein Thixotropiermittel (B) und wenigstens ein Bindemittel (C) und ggf. wenigstens einen Härter (D) aufweisen, kann auch gemeinsam mit einer weiteren Komponente wie beispielsweise einem Additiv (E) wie eine Pigmentpaste oder einem Bindemittel (C) erst kurz vor der Durchmischung, z.B. in einer Dosier- und Mischanlage im Mischkopf, erfolgen. Die Mischung der Komponenten muss innerhalb einer bestimmten Zeit verarbeitet werden (Topfzeit bzw. Verarbeitungszeit), da sich die Verarbeitbarkeit nach Ablauf dieser Zeit zunehmend verschlechtert. Zwei-Komponentensysteme werden eingesetzt bei besonders hohen Anforderungen hinsichtlich der Temperaturempfindlichkeit des zu beschichtenden Objektes, übermäßiger Objektgröße (Fassaden, Maschinen, Rotorblätter von Windkraftanlagen etc.), Beständigkeit gegen mechanische, chemische und klimatische Belastungen und rascher Härtung bei Raumtemperatur oder geringfügig erhöhter Temperaturen (bis beispielsweise 100 °C). Bei Zwei-Komponentensystemen wird jede der Komponenten getrennt gelagert und erst bei Bedarf wird die reaktionsfähige Mischung der Komponenten hergestellt.

Die vorliegende Erfindung betrifft weiterhin ein Verfahren zur Herstellung der erfindungsgemäßen Zusammensetzungen. Die erfindungsgemäße Zusammensetzung kann dadurch hergestellt werden, dass die jeweiligen Komponenten der Beschichtungszusammensetzung, die oben beschrieben worden sind, beispielsweise mittels automatisierter Dosier- und Mischanlagen, Schnellrührer, Rührkessel, Rührwerksmühlen, Dissolver, Kneter, oder In-Line-Dissolver gemischt und dispergiert und/oder gelöst werden.

Die erfindungsgemäße Zusammensetzung eignet sich als Klebstoff, Dichtstoff, Lack, Beschichtungsmittel, Klebeharz, Gießharz, Kunstmarmor, Fußbodenbelag, Polymerbeton oder Faserverbundmaterial, insbesondere als Klebeharz.

Ein weiterer Gegenstand der vorliegenden Erfindung ist daher eine Verwendung der erfindungsgemäßen Zusammensetzung als Klebstoff, Dichtstoff, Lack, Beschichtungsmittel, Klebeharz, Gießharz, Kunstmarmor, Fußbodenbelag, Polymerbeton oder Faserverbundmaterial, vorzugsweise als Klebstoff, Dichtstoff, Lack, Beschichtungsmittel, Klebeharz oder Gießharz, insbesondere als Klebeharz.

Ein weiterer Gegenstand der vorliegenden Erfindung ist ein Kondensationsprodukt (A) in Form der freien Verbindung oder in Form eines Salzes, welches erhältlich ist durch Umsetzung

(a1) wenigstens einer polymerisierten Fettsäure wie beispielsweise wenigstens einer dimersierten oder trimerisierten Fettsäure oder eines Gemisches polymerisierter Fettsäuren, welches einen Anteil von wenigstens 50 Gew.-% an trimerisierten Fettsäuren, bezogen auf das Gesamtgewicht des Gemisches, enthält, vorzugsweise wenigstens einer trimerisierten aliphatischen $C_{18}$-Monocarbonsäure oder eines Gemisches aus einer trimerisierten aliphatischen $C_{18}$-Monocarbonsäure und einer dimerisierten aliphatischen $C_{18}$-Monocarbonsäure, oder
wenigstens eines Umsetzungsprodukts (U) von wenigstens zwei polymerisierten Fettsäuren und wenigstens einem wenigstens zwei primäre Amino-Gruppen aufweisenden Polyamin, vorzugsweise wenigstens eines Umsetzungsprodukts (U) von wenigstens zwei polymerisierten Fettsäuren und wenigstens einem wenigstens zwei primäre Amino-Gruppen aufweisenden Polyamin,
mit

(a2) wenigstens einem zur Ausbildung wenigstens einer Imidazolin- und/oder Tetrahydropyrimidin-Einheit befähigten Polyalkylenpolyamin, welches wenigstens zwei primäre Amino-Gruppen oder wenigstens eine primäre und wenigstens eine sekundäre Amino-Gruppe aufweist, vorzugsweise Triethylentetramin.

Alle im Zusammenhang mit dem Kondensationsprodukt (A) und dessen Verwendung als Thixotropie-verstärkendes Additiv in den hierin vorstehend beschriebenen bevorzugten Ausführungsformen sind auch bevorzugte Ausführungsformen des Kondensationsprodukts (A) per se.

Bestimmung des Gehalts an tertiärem Stickstoff

Der Gehalt an tertiärem Stickstoff gibt den prozentualen Gehalt an gebundenem tertiärem Basenstickstoff in einer zu untersuchenden Probe an. Bei der Bestimmungsmethode wird ausgenutzt, dass tertiäre Amino-Gruppen - im Gegensatz zu primären und sekundären Amino-Gruppen - nicht mit Anhydriden zu Amiden reagieren: werden primäre und sekundäre Amino-Gruppen mit Essigsäureanhydrid acteyliert, so können die tertiären Amino-Gruppen anschließend mit Perchlorsäure quantitativ titriert werden. Zur Bestimmung des Gehalts an tertiärem Stickstoff einer Probe wird eine zu untersuchende Menge einer Probe auf 0,1 mg genau in einem 80ml-Becherglas auf einer Analysenwaage abgewogen. Die einzuwiegende Menge der zu untersuchende Menge richtet sich nach dem zu erwartenden Gehalt an tertiärem Stickstoff und ist der nachstehenden Tabelle zu entnehmen:

| *Erwarteter Gehalt an tertiärem Stickstoff [%]* | *Einzuwiegende Probenmenge [g]* |
|---|---|
| 0 - 0,3 | 3 - 5 |
| 0,3 - 0,6 | 1,5 - 3 |
| 0,6 - 0,9 | 1,0 - 1,5 |
| 0,9 - 1,5 | 0,6 - 1,0 |
| 1,5 - 2,0 | 0,45 - 0,6 |
| 2,0 - 3,0 | 0,30 - 0,45 |
| 3 - 5 | 0,15 - 0,30 |
| 5 - 10 | 0,08 - 0,15 |
| 10 - 20 | 0,06 - 0,08 |

Die Probe wird in 20 ml Essigsäure (99,8%-ig) und 30 ml Essigsäureanhydrid (98,5 %-ig) gelöst. Anschließend wird die so erhaltene Probenlösung mit einem Schliffdeckel versehen über einer Dauer von 30 Minuten bei 70°C im Thermoblock oder Wasserbad erwärmt. Nach dem Abkühlen der Probenlösung wird diese auf einen Magnetrührer gestellt und in die Probenlösung eine Ag/AgCl-Einstabelektrode eingetaucht. Die Einstabelektrode ist Teil eines Mikroprozessor-gesteuerten Analysengeräts (Titrator DL77, DL70 ES oder DL67) der Firma Mettler. Die Probenlösung wird mit Perchlorsäure (0,1 N in Essigsäure, anhydridfrei) titriert. Die Bestimmung des Gehalts an tertiärem Stickstoff erfolgt durch das eingesetzte Analysengerät. Der Gehalt an tertiärem Stickstoff berechnet sich dabei wie folgt:

$$\text{Tertiärer N-Gehalt (Gew.-\%)} = \frac{\text{Verbrauch ml} \times \text{N} \times \text{f} \times 1{,}4008}{\text{Einwaage in g}}$$

N = Normalität des Titrationsmittels
f = Faktor des Titrationsmittels

Der Faktor f berücksichtigt dabei gegebenenfalls die Abweichung des eingesetzten Titrationsmittels von einer Normalität von 0,1 N.

Ermittlung des Ablaufverhaltens und Bestimmung der Ablaufgrenze

Zur Ermittlung des Ablaufverhaltens und zur Bestimmung der Ablaufgrenze wird wie folgt vorgegangen:

Es wird eine erfindungsgemäße Zusammensetzung umfassend wenigstens ein Kondensationsprodukt (A) und wenigstens ein Thixotropiermittel (B) bereitgestellt, die zudem wenigstens ein Bindemittel (C) umfasst. Zu dieser Zusammensetzung wird unter Rühren wenigstens ein Härter (D) gegeben und die resultierende Zusammensetzung weiter über die Dauer von 1 Minute durchmischt. Die so erhaltene erfindungsgemäße Zusammensetzung wird in eine Stufenrakelvorrichtung der Firma Erichsen (Modell 421-S) gefüllt und mittels einer Aufziehbank der Firma Erichsen (Modell 509 MC III) auf eine Byko-chart-2802-Karte (Drawdown chart) mit einem Vorschub von 25 mm/s in unterschiedlichen Schichtstärken appliziert. Mit der hierfür verwendeten Stufenrakel lassen sich Schichtdicken bis maximal 1000 µm in Abstufungen von 50 µm erhalten.

Direkt nach dem Aufzug wird die Zusammensetzung in die Senkrechte gebracht und in Abhängigkeit vom eingesetzten Bindemittel (C) bei Raumtemperatur oder bei 60°C über die Dauer von ca. 14 h ausgehärtet. Nach der Aushärtung erfolgt die Ermittlung des Ablaufverhaltens bzw. die Bestimmung der Ablaufgrenze anhand des visuell bewertbaren Standvermögens der in unterschiedlichen Schichtstärken applizierten Zusammensetzungen.

Je höher die Ablaufgrenze ist, desto besser ist die Thixotropie-verstärkende Wirkung des in der erfindungsgemäßen Zusammensetzung enthaltenen Kondensationsprodukts (A) bzw. desto höher ist die Schichtdicke, in der die erfindungsgemäße Zusammensetzung an senkrechten Flächen ohne Ablaufen appliziert werden kann.

Die nachfolgenden Beispiele und Vergleichsbeispiele dienen der Erläuterung der Erfindung, sind jedoch nicht einschränkend auszulegen.

**Beispiele und Vergleichsbeispiele**

Sofern nicht anders angeführt, handelt es sich bei den Angaben in Teilen um Gewichtsteile und bei Angaben in Prozenten um Gewichtsprozente.

1. Herstellung von Kondensationsprodukten (A)

1.1 Allgemeine Vorschrift zur Herstellung von erfindungsgemäß als Thixotropie-verstärkende Additive eingesetzten Kondensationsprodukten (A):

Es wird wenigstens eine polymerisierte Fettsäure oder wenigstens ein Umsetzungsprodukt von wenigstens zwei polymerisierten Fettsäuren und wenigstens einem wenigstens zwei primäre Amino-Gruppen aufweisenden Polyamin als Komponente (a1) oder ein jeweils zur Herstellung des Kondensationsprodukts (A) einsetzbares Derivat davon wie beispielsweise ein entsprechender Ester in einem Reaktionsgefäß mit Rührer, Rückflusskühler und Wasserabscheider vorgelegt und mit wenigstens einem Polyalkylenpolyamin als Komponente (a2) und gegebenenfalls wenigstens einem Lösemittel gemischt und solange unter Rühren auf eine Temperatur im Bereich von 150°C bis 300°C erhitzt, bis die erwünschte Menge an Wasser abgeschieden ist, welche vorzugsweise den vollständigen Umsatz der Komponente (a1) mit der Komponente (a2) anzeigt.

Auf diese Weise werden die folgenden in Tabelle 1 angegebenen Kondensationsprodukte (A) als Beispiele K1-K31 erhalten. Es wird jeweils 1 Mol an Komponente (a2) pro in Komponente (a1) enthaltener Carbonsäure-Gruppe

eingesetzt. Werden beispielsweise 1 Mol einer trimerisierten Fettsäure als Komponente (a1) eingesetzt, so werden 3 Mol an Komponente (a2) eingesetzt.

Tabelle 1

| Beispiel | Komponente (a1) | Menge (a1) [g] | Komponente (a2) | Menge (a2) [g] | Lösemittel L | Abgeschiedene Menge an Wasser [g] |
|---|---|---|---|---|---|---|
| K1 | A1 | 303 | B1 | 150 | 400 g L1 | 36 |
| K2 | A2 | 572 | B1 | 292 | 400 g L1 | 72 |
| K3 | A3 | 575 | B1 | 292 | 400 g L1 | 72 |
| K4 | A4 | 581 | B1 | 292 | 400 g L1 | 72 |
| K5 | A5 | 881 | B1 | 438 | 400 g L1 | 108 |
| K6 | A8 | 1188 | B1 | 292 | 200 g L1 | 72 |
| K7 | A9 | 1250 | B1 | 292 | 200 g L1 | 72 |
| K8 | A10 | 1230 | B1 | 292 | 200 g L1 | 72 |
| K9 | A11 | 1284 | B1 | 292 | - | 72 |
| K10 | A12 | 1862 | B1 | 584 | - | 144 |
| K11 | A13 | 1896 | B1 | 584 | - | 144 |
| K12 | A14 | 1536 | B1 | 438 | - | 108 |
| K13 | A3 + A5 | 291 + 291 | B1 | 292 | 400 g L1 | 72 |
| K14 | A6 + A5 | 592 + 592 | B1 | 584 | 400 g L1 | 144 |
| K15 | A3 + A8 | 882 + 882 | B1 | 292 | 400 g L1 | 72 |
| K16 | A3 | 575 | B2 | 206 | 400 g L1 | 72 |
| K17 | A5 | 881 | B2 | 309 | 400 g L1 | 108 |
| K18 | A3 + A5 | 291 + 291 | B2 | 206 | 400 g L1 | 72 |
| K19 | A12 | 1862 | B2 | 412 | - | 144 |
| K20 | A3 | 575 | B3 | 378 | 400 g L1 | 72 |
| K21 | A5 | 881 | B3 | 568 | 400 g L1 | 108 |
| K22 | A2 | 572 | B3 | 378 | 400 g L1 | 72 |
| K23 | A3 | 575 | B4 | 464 | 400 g L1 | 72 |
| K24 | A5 | 881 | B4 | 698 | 400 g L1 | 108 |
| K25 | A3 | 575 | B5 | 148 | 400 g L1 | 72 |
| K26 | A5 | 881 | B5 | 222 | 400 g L1 | 108 |
| K27 | A3 | 575 | B6 | 262 | 400 g L1 | 72 |
| K28 | A5 | 881 | B6 | 393 | 400 g L1 | 108 |
| K29 | A3 | 575 | B7 | 294 | 400 g L1 | 72 |
| K30 | A5 | 881 | B7 | 441 | 400 g L1 | 108 |
| K31 | A7 | 603 | B7 | 294 | 400 g L1 | ** |
| ** Im Fall von K-31 wurde mit A-7 ein Dimethylester einer dimerisierter Fettsäure als Komponente (a1) eingesetzt. Daher wird neben Wasser bei der Umsetzung Methanol abgeschieden. Insgesamt werden insgesamt 64 g Methanol und 32 g Wasser abgeschieden. | | | | | | |

Dabei haben die in Tabelle 1 verwendeten Abkürzungen folgende Bedeutungen:

Komponente (a1):

A1: Gemisch polymerisierter ungesättigter aliphatischer $C_{18}$-Fettsäuren mit einen Anteil von 80 Gew.-% an trimerisierter Fettsäure und einem Anteil von 20 Gew.-% an dimerisierter Fettsäure, jeweils bezogen auf das Gesamtgewicht des Gemisches, mit einer Säurezahl von 185 mg KOH/g,

A2: Gemisch polymerisierter gesättigter Fettsäuren mit einen Anteil von 92-98 Gew.-% an dimerisierter Fettsäure, bezogen auf das Gesamtgewicht des Gemisches, mit einer Säurezahl von 196 mg KOH/g, kommerziell erhältlich unter der Bezeichnung Pripol 1006 der Firma Croda,

A3: Gemisch polymerisierter Fettsäuren mit einen Anteil von > 97 Gew.-% an dimerisierter Fettsäure, bezogen auf das Gesamtgewicht des Gemisches, mit einer Säurezahl von 195 mg KOH/g, kommerziell erhältlich unter der Bezeichnung Pripol 1012 der Firma Croda,

A4: Gemisch polymerisierter Fettsäuren mit einen Anteil von 72-79 Gew.-% an dimerisierter Fettsäure und einem Anteil von 20-23 Gew.-% an trimerisierter Fettsäure, jeweils bezogen auf das Gesamtgewicht des Gemisches, mit einer Säurezahl von 193 mg KOH/g, kommerziell erhältlich unter der Bezeichnung Pripol 1022 der Firma Croda,

A5: Gemisch polymerisierter Fettsäuren mit einen Anteil von > 75 Gew.-% an trimerisierter Fettsäure, jeweils bezogen auf das Gesamtgewicht des Gemisches, mit einer Säurezahl von 191 mg KOH/g, kommerziell erhältlich unter der Bezeichnung Pripol 1040 der Firma Croda,

A6: Tallölfettsäure mit einer Säurezahl 186 mg KOH/g,

A7: Dimethylester einer dimerisierten Fettsäure, der in einem Gemisch polymerisierter Fettsäuren mit einen Anteil von > 97 Gew.-% vorliegt, bezogen auf das Gesamtgewicht des Gemisches.

Bei den als Komponente (a1) eingesetzten Verbindungen A8 bis A14 handelt sich um Umsetzungsprodukte von wenigstens zwei polymerisierten Fettsäuren und wenigstens einem wenigstens zwei primäre Amino-Gruppen aufweisenden Polyamin.

Die als Komponente (a1) eingesetzten Umsetzungsprodukte A8 bis A14 können gemäß nachfolgender allgemeiner Vorschrift erhalten werden:

Es wird wenigstens eine polymerisierte Fettsäure oder ein zur Herstellung des Umsetzungsprodukts (U) einsetzbares Derivat davon wie beispielsweise ein entsprechender Ester in einem Reaktionsgefäß mit Rührer, Rückflusskühler und Wasserabscheider vorgelegt und mit wenigstens einem wenigstens zwei primäre Amino-Gruppen aufweisenden Polyamin wie beispielsweise einem Diamin und gegebenenfalls wenigstens einem Lösemittel gemischt und solange unter Rühren auf eine Temperatur im Bereich von 130°C bis 160°C erhitzt, bis die erwünschte Menge an Wasser abgeschieden ist.

Auf diese Weise werden die folgenden in Tabelle 2 als Komponente (a1) einsetzbaren genannten Umsetzungsprodukte A8 bis A14 erhalten.

| Komponente (a1) | Eingesetzte polymerisierte Fettsäure | Menge an polymerisierter Fettsäure [g] | Polyamin | Menge Polyamin [g] | Lösemittel L | Abgeschiedene Menge an Wasser [g] |
|---|---|---|---|---|---|---|
| A8 | A3 | 1150 | B5 | 74 | 200 g L1 | 36 |
| A9 | A3 | 1150 | B8 | 136 | 200 g L1 | 36 |
| A10 | A3 | 1150 | B9 | 116 | 200 g L1 | 36 |
| A11 | A3 | 1150 | B10 | 170 | 400 g L1 | 36 |
| A12 | A5 | 1762 | B8 | 136 | 400 g L1 | 36 |
| A13 | A5 | 1762 | B10 | 170 | 400 g L1 | 36 |
| A14 | A3 + A5 | 728 + 728 | B9 | 116 | 400 g L1 | 36 |

Dabei haben die in Tabelle 2 verwendeten Abkürzungen A3, A5, L1 sowie B5 die Bedeutungen wie in Tabelle 1.

Die in Tabelle 2 zudem verwendeten Abkürzungen haben folgende Bedeutungen:

B8 : m-Xylylendiamin (CAS-Nr. : 153326-45-5)
B9 : 1,6-Diaminohexan (CAS-Nr. : 124-09-4)
B10 : Isophorondiamin (Isomerengemisch, CAS-Nr. : 2855-13-2)

Komponente (a2):

B1: Triethylentetramin (CAS-Nr.: 112-24-3)
B2: Diethylentriamin (CAS-Nr. : 111-40-0)
B3: Tetraethylenpentamin (CAS-Nr.: 112-57-2)
B4: Pentaethylenhexamin (Isomerengemisch, CAS-Nr.: 4067-16-7)
B5: 1,3-Diaminopropan (CAS-Nr.: 109-76-2)
B6: Dipropylentriamin (CAS-Nr.: 56-18-8)
B7: 2-(2-(2-Aminoethylamino)ethylamino)ethanol (CAS: 1965-29-3)

Lösemittel :

L1: Solvent Naphtha, aromatische Kohlenwasserstoff-Fraktion, Siedebereich: 150°C bis -210°C

2. Herstellung von erfindungsgemäßen Zusammensetzungen und Vergleichszusammensetzungen

Allgemeine Vorschrift zur Herstellung von erfindungsgemäßen Zusammensetzungen umfassend wenigstens ein Kondensationsprodukt (A), wenigstens ein Thixotropiermittel (B) und wenigstens ein Bindemittel (C) und gegebenenfalls wenigstens einen Härter (D) sowie entsprechenden Vergleichszusammensetzungen.

*2.1 Zusammensetzungen enthaltend wenigstens ein Poly(meth)acrylat-basiertes Harz als Bindemittel (C)*

Zur Herstellung des Bindemittel (C) werden 20% Degalan LP 51/3 (Acryl-Polymeres der Firma Evonik) in Methylmethacrylat (Firma Evonik) gelöst. 50 Anteile dieses flüssigen Basissirups werden mit 0,25 Anteilen des Beschleunigers Pergaquick A150 (N,N-Di-(2-hydroxy-ethyl)-p-toluidin der Firma Pergan) versetzt und dieser mittels eines Dispermaten CV (Zahnscheibe 2 cm, 1500 U/Min bei 2 Minuten) in den Sirup eingearbeitet.

Danach erfolgt die Zugabe von einem Anteil Aerosil 200 (hydrophile pyrogene Kieselsäure, spezifische Oberfläche von 200 $m^2/g$ von Evonik) als Thixotropiermittel (B). Diese Mischung wird 5 Minuten im Dispermaten CV, (Zahnscheibe 4 cm, 8000 U/Min) im System dispergiert.

Zu dieser Mischung wird im Anschluss ein Kondensationsprodukt (A) zur Herstellung einer erfindungsgemäßen Zusammensetzung Z1 bis Z7 oder eine aus DE 37 06 860 A1 bekannte Verbindung V1 (darin als Beispiel 8 offenbart) zur Herstellung einer Vergleichszusammensetzung VZ1 (siehe Tabelle 3) zugegeben und jeweils 1 Minute mit dem Dispermaten CV, Zahnscheibe 2 cm, 1500 U/Min eingearbeitet. Zudem wird eine entsprechende Zusammensetzung ohne Zusatz einer weiteren Komponente hergestellt (Vergleichszusammensetzung VZ2).

Nach Abkühlung auf Raumtemperatur werden zu 50 g jeder der Zusammensetzungen Z1 bis Z7 und VZ1 bis VZ2 0,75 g Peroxan BP-Pulver 50W (Dibenzoylperoxid der Firma Pergan) als Härter (D) zugegeben und über eine Dauer von 60 Sekunden homogenisiert.

Für die Zusammensetzungen Z1 bis Z7 und VZ1 bis VZ2 wird nach der vorstehend beschrieben Methode ihr Ablaufverhalten ermittelt bzw. die Ablaufgrenze bestimmt, wobei die Aushärtung bei Raumtemperatur erfolgt. Es wird die höchste stabile Schichtdicke, bei der kein Ablaufen beobachtet wird, als Ablaufgrenze in $\mu m$ angegeben. Die Ergebnisse sind in Tabelle 3 dargestellt:

Tabelle 3:

| Beispiel/Vergleichsbeispiel | Kondensationsprodukt (A) | Menge (A), jeweils bezogen auf das Gesamtgewicht des Thixotropiermittels (B) [Gew.-%] | Menge (B), jeweils bezogen auf das Gesamtgewicht des Bindemittels (C) [Gew.-%] | Ablaufgrenze [μm] |
|---|---|---|---|---|
| VZ2 | - | - | 2,0 | < 500 |
| VZ1 | V1* | 20 | 2,0 | 800 |
| Z1 | K1 | 20 | 2,0 | > 1000 |
| Z2 | K3 | 20 | 2,0 | 900 |
| Z3 | K4 | 20 | 2,0 | > 1000 |
| Z4 | K13 | 20 | 2,0 | > 1000 |
| Z5 | K16 | 20 | 2,0 | 950 |
| Z6 | K17 | 20 | 2,0 | > 1000 |
| Z7 | K24 | 20 | 2,0 | 950 |
| *V1: als Vergleichsbeispiel V1 wurde Beispielverbindung 8 aus DE 3706860 A1 eingesetzt | | | | |

*2.2 Zusammensetzungen enthaltend wenigstens ein Polyester-basiertes Harz (ungesättigter Polyester) als Bindemittel (C)*

Zur Herstellung des Bindemittels (C) werden 100 Anteile Palatal P 4-01 (ungesättigtes Polyesterharz auf Basis Orthophthalsäure und Glykolen, gelöst in Styrol, der Firma DSM) mit 1,0 Anteilen NL 49 P (Cobaltoctoat, Firma AKZO-Nobel) als Beschleuniger sowie 0,5 Anteilen an BYK-A 555 (Entlüfter, Firma BYK-Chemie) vorgelegt und mittels Dispermaten CV (Zahnscheibe 2 cm, 1500 U/Min) für 2 Minuten eingearbeitet.

Danach erfolgt die Zugabe von 2,0 Anteilen Aerosil 200 (hydrophile pyrogene Kieselsäure, spezifische Oberfläche von 200 $m^2/g$ von Evonik) als Thixotropiermittel (B). Die Mischung wird 15 Minuten im Dispermaten CV (Zahnscheibe 4 cm, 8000 U/Min) dispergiert.

Zu dieser Mischung wird im Anschluss ein Kondensationsprodukt (A) zur Herstellung einer erfindungsgemäßen Zusammensetzung Z8 bis Z14 oder eine aus DE 37 06 860 A1 bekannte Verbindung V1 (darin als Beispiel 8 offenbart) zur Herstellung einer Vergleichszusammensetzung VZ3 (siehe Tabelle 4) zugegeben und jeweils 1 Minute mit dem Dispermaten CV, Zahnscheibe 2 cm, 1500 U/Min eingearbeitet. Zudem wird eine entsprechende Zusammensetzung ohne Zusatz einer weiteren Komponente hergestellt (Vergleichszusammensetzung VZ4). Zudem wird eine entsprechende Zusammensetzung ohne Zusatz einer weiteren Komponente und zudem ohne Zusatz des Thixotropiermittels (B) hergestellt (Vergleichszusammensetzung VZ5).

Zu 50 g jeder der Zusammensetzungen werden 0,5 g Trigonox 44 B (Acetylacetonperoxid, Firma AKZO-Nobel) als Härter (D) gegeben und über eine Dauer von 60 Sekunden homogenisiert.

Für die Zusammensetzungen Z8 bis Z14 und VZ3 bis VZ5 wird nach der vorstehend beschrieben Methode ihr Ablaufverhalten ermittelt bzw. die Ablaufgrenze bestimmt, wobei die Aushärtung bei 60°C erfolgt. Es wird die höchste stabile Schichtdicke, bei der kein Ablaufen beobachtet wird, als Ablaufgrenze in μm angegeben. Die Ergebnisse sind in Tabelle 4 dargestellt:

Tabelle 4:

| Beispiel/Vergleichsbeispiel | Kondensationsprodukt (A) | Menge (A), jeweils bezogen auf das Gesamtgewicht des Thixotropiermittels (B) [Gew.-%] | Menge (B), jeweils bezogen auf das Gesamtgewicht des Bindemittels (C) [Gew.-%] | Ablaufgrenze [μm] |
|---|---|---|---|---|
| VZ5 | - | - | - | 50 |

(fortgesetzt)

| Beispiel/Vergleichsbeispiel | Kondensationsprodukt (A) | Menge (A), jeweils bezogen auf das Gesamtgewicht des Thixotropiermittels (B) [Gew.-%] | Menge (B), jeweils bezogen auf das Gesamtgewicht des Bindemittels (C) [Gew.-%] | Ablaufgrenze [μm] |
|---|---|---|---|---|
| VZ4 | - | - | 2,0 | < 500 |
| VZ3 | V1* | 20 | 2,0 | 650 |
| Z8 | K1 | 20 | 2,0 | 850 |
| Z9 | K3 | 20 | 2,0 | 700 |
| Z10 | K4 | 20 | 2,0 | > 1000 |
| Z11 | K13 | 20 | 2,0 | 900 |
| Z12 | K16 | 20 | 2,0 | 750 |
| Z13 | K17 | 20 | 2,0 | 950 |
| Z14 | K24 | 20 | 2,0 | 900 |
| *V1: als Vergleichsbeispiel V1 wurde Beispielverbindung 8 aus DE 3706860 A1 eingesetzt | | | | |

*2.3 Zusammensetzungen enthaltend wenigstens ein Polyester-basiertes Harz (ungesättigter Polyester) als Bindemittel (C)*

Zur Herstellung des Bindemittels (C) werden 100 Anteile KRF-1100 (ungesättigtes Polyesterharz auf Basis von ortho-Phthalsäure und Standard-Glykolen, Firma CCP) mit 1,0 Anteilen Accelerator NL 49 P sowie 0,5 Anteilen BYK-A 555 vorgelegt und mittels Dispermaten CV (Zahnscheibe 2 cm, 1500 U / Min) zwei Minuten eingearbeitet.

Danach erfolgt die Zugabe von 3,0 Anteilen Aerosil 200 als Thixotropiermittel (B). Das ganze System wird 15 Minuten im Dispermaten CV, Zahnscheibe 4 cm, 8000 U / Min dispergiert.

Zu dieser Mischung wird im Anschluss ein Kondensationsprodukt (A) zur Herstellung einer erfindungsgemäßen Zusammensetzung Z15 bis Z21 oder eine aus DE 37 06 860 A1 bekannte Verbindung V1 (darin als Beispiel 8 offenbart) zur Herstellung einer Vergleichszusammensetzung VZ6 (siehe Tabelle 5) zugegeben und jeweils 1 Minute mit dem Dispermaten CV, Zahnscheibe 2 cm, 1500 U/Min eingearbeitet. Zudem wird eine entsprechende Zusammensetzung ohne Zusatz einer weiteren Komponente hergestellt (Vergleichszusammensetzung VZ7). Zudem wird eine entsprechende Zusammensetzung ohne Zusatz einer weiteren Komponente und zudem ohne Zusatz des Thixotropiermittels (B) hergestellt (Vergleichszusammensetzung VZ8).

Zu 50 g jeder der Zusammensetzungen werden 0,5 g Trigonox 44 B (Acetylacetonperoxid, Firma AKZO-Nobel) als Härter (D) gegeben und über eine Dauer von 60 Sekunden homogenisiert.

Für die Zusammensetzungen Z15 bis Z21 und VZ6 bis VZ8 wird nach der vorstehend beschrieben Methode ihr Ablaufverhalten ermittelt bzw. die Ablaufgrenze bestimmt, wobei die Aushärtung bei 60°C erfolgt. Es wird die höchste stabile Schichtdicke, bei der kein Ablaufen beobachtet wird, als Ablaufgrenze in μm angegeben. Die Ergebnisse sind in Tabelle 5 dargestellt.

Tabelle 5:

| Beispiel/Vergleichsbeispiel | Kondensationsprodukt (A) | Menge (A), jeweils bezogen auf das Gesamtgewicht des Thixotropiermittels (B) [Gew.-%] | Menge (B), jeweils bezogen auf das Gesamtgewicht des Bindemittels (C) [Gew.-%] | Ablaufgrenze [μm] |
|---|---|---|---|---|
| VZ8 | - | - | - | 50 |
| VZ7 | - | - | 3,0 | < 500 |
| VZ6 | V1* | 20 | 3,0 | 650 |

(fortgesetzt)

| Beispiel/Vergleichsbeispiel | Kondensationsprodukt (A) | Menge (A), jeweils bezogen auf das Gesamtgewicht des Thixotropiermittels (B) [Gew.-%] | Menge (B), jeweils bezogen auf das Gesamtgewicht des Bindemittels (C) [Gew.-%] | Ablaufgrenze [μm] |
|---|---|---|---|---|
| Z15 | K1 | 20 | 3,0 | > 1000 |
| Z16 | K3 | 20 | 3,0 | 850 |
| Z17 | K4 | 20 | 3,0 | > 1000 |
| Z18 | K13 | 20 | 3,0 | 750 |
| Z19 | K16 | 20 | 3,0 | 800 |
| Z20 | K17 | 20 | 3,0 | > 1000 |
| Z21 | K24 | 20 | 3,0 | 850 |
| *V1: als Vergleichsbeispiel V1 wurde Beispielverbindung 8 aus DE 3706860 A1 eingesetzt | | | | |

***2.4** Zusammensetzungen enthaltend wenigstens ein Epoxid-basiertes Harz als Bindemittel (C)*

Zur Herstellung des Bindemittels (C) werden 99,5 Anteile flüssiges Epoxidharzblend (RIM R 1335: modifiziertes Bisphenol-A-Harz, Molekulargewicht > 700 g/mol, Epoxidwert: 5,6 mol/kg, der Firma Momentive) mit 0,5 Anteilen BYK-A 530 (Entlüfter, Firma BYK-Chemie) versetzt und mittels Dispermaten CV (Zahnscheibe 2 cm, 1500 U/Min) 2 Minuten eingearbeitet.

Danach erfolgt die Zugabe von 2,6 Teilen Aerosil 200 oder Aerosil 380 (hydrophile pyrogene Kieselsäure, 380 $m^2/g$ spezifische Oberfläche, von Evonik) als Thixotropiermittel (B). Diese Mischung wird 15 Minuten mit einem Dispermaten CV (Zahnscheibe 4 cm, 8000 U/Min) dispergiert (Komponente M1).

100 Anteile eines Amin-Härterblends als Härter (D) (CeTePox 1393-02H (Mischung aus Isophorondiamin, m-Xylylendiamin, Benzyalkohol, Salicylsäure und Nonylphenol, H-Äquivalent 93, der Firma CTP GmbH) werden in einem Mischbehälter vorgelegt. Zu dieser Mischung wird im Anschluss ein Kondensationsprodukt (A) zur Herstellung einer erfindungsgemäßen Zusammensetzung Z22 bis Z29 oder eine aus DE 37 06 860 A1 bekannte Verbindung V1 (darin als Beispiel 8 offenbart) zur Herstellung einer Vergleichszusammensetzung VZ9 (siehe Tabelle 6) zugegeben und jeweils 2 Minuten mit dem Dispermaten CV, Zahnscheibe 2 cm, 1500 U/Min eingearbeitet (Komponente M2). Zudem wird eine entsprechende Zusammensetzung ohne Zusatz einer weiteren Komponente hergestellt (Vergleichszusammensetzung VZ10).

100 Teile der Komponente M1 werden mit 50 Teilen der Komponente M2 in einem Becher 1 Minute gut miteinander vermischt.

Für die Zusammensetzungen Z22 bis Z29 und VZ9 bis VZ10 wird nach der vorstehend beschrieben Methode ihr Ablaufverhalten ermittelt bzw. die Ablaufgrenze bestimmt, wobei die Aushärtung bei Raumtemperatur erfolgt. Es wird die höchste stabile Schichtdicke, bei der kein Ablaufen beobachtet wird, als Ablaufgrenze in μm angegeben. Die Ergebnisse sind in Tabelle 6 dargestellt.

Die Zusammensetzungen VZ9, VZ10, Z22 und Z24-Z29 enthalten Aerosil 200 als Thixotropiermittel (B) und die Zusammensetzung Z23 enthält Aerosil 380 als Thixotropiermittel (B).

Tabelle 6:

| Beispiel/Vergleichsbeispiel | Kondensationsprodukt (A) | Menge (A), jeweils bezogen auf das Gesamtgewicht des Thixotropiermittels (B) [Gew.-%] | Menge (B), jeweils bezogen auf das Gesamtgewicht des Bindemittels (C) [Gew.-%] | Ablaufgrenze [μm] |
|---|---|---|---|---|
| VZ10 | - | - | 2,6 | < 550 |
| VZ9 | V1* | 20 | 2,6 | < 550 |

(fortgesetzt)

| Beispiel/Vergleichsbeispiel | Kondensationsprodukt (A) | Menge (A), jeweils bezogen auf das Gesamtgewicht des Thixotropiermittels (B) [Gew.-%] | Menge (B), jeweils bezogen auf das Gesamtgewicht des Bindemittels (C) [Gew.-%] | Ablaufgrenze [μm] |
|---|---|---|---|---|
| Z22 | K1 | 20 | 2,6 | >1000 |
| Z23 | K1 | 20 | 2,6 | >1000 |
| Z24 | K3 | 20 | 2,6 | 900 |
| Z25 | K4 | 20 | 2,6 | > 1000 |
| Z26 | K13 | 20 | 2,6 | 900 |
| Z27 | K16 | 20 | 2,6 | 750 |
| Z28 | K17 | 20 | 2,6 | > 1000 |
| Z29 | K24 | 20 | 2,6 | > 1000 |
| *V1: als Vergleichsbeispiel V1 wurde Beispielverbindung 8 aus DE 3706860 A1 eingesetzt | | | | |

***2.5** Zusammensetzungen enthaltend wenigstens ein Epoxid-basiertes Harz als Bindemittel (C)*

Zur Herstellung des Bindemittels (C) werden in 64 Teile flüssiges Epoxidharz, (Epikote 1001: modifiziertes Bisphenol-A Harz der Firma Momentive) werden 0,5 Anteile BYK-052 (silikonfreier Entschäumer auf Polymerbasis, Firma BYK-Chemie), 7,5 Anteile Bayferrox 130 M (Eisenoxidrotpigment der Firma Lanxess), 57 Anteile Blanc Fixe N (Bariumsulfat der Firma Sachtleben) und 21 Teile Isobutanol gegeben und mittels Dispermat CV, (Zahnscheibe 4 cm, 8500 U/Min) 30 Minuten eingearbeitet.

Danach erfolgt die Zugabe von 1 Teil Thixotropiermittel (B). Diese Mischung wird 15 Minuten mit einem Dispermat CV, Zahnscheibe 4 cm, 8500 U/Min dispergiert (Komponente M1). Als Thixotropiermittel (B) wird Aerosil 200 oder Aerosil R972 (mit Dimethyldichlorsilan hydrophobierte pyrogene Kieselsäure von Evonik) eingesetzt (Komponente M1).

100 Teile Epikure 550 (Aminhärterblend, Firma Momentive) als Härter (D) werden in einem Mischbehälter vorgelegt. Zu dieser Mischung wird im Anschluss ein Kondensationsprodukt (A) zur Herstellung einer erfindungsgemäßen Zusammensetzung Z30 bis Z37 oder eine aus DE 37 06 860 A1 bekannte Verbindung V1 (darin als Beispiel 8 offenbart) zur Herstellung einer Vergleichszusammensetzung VZ11 (siehe Tabelle 7) zugegeben und jeweils 2 Minuten mit dem Dispermaten CV, Zahnscheibe 2 cm, 1500 U/Min eingearbeitet (Komponente M2). Zudem wird eine entsprechende Zusammensetzung ohne Zusatz einer weiteren Komponente hergestellt (Vergleichszusammensetzung VZ12).

100 Teile der Komponente M1 werden mit 33 Teilen der Komponente M2 in einem Becher 1 Minute gut miteinander vermischt.

Für die Zusammensetzungen Z30 bis Z37 und VZ11 bis VZ12 wird nach der vorstehend beschrieben Methode ihr Ablaufverhalten ermittelt bzw. die Ablaufgrenze bestimmt, wobei die Aushärtung bei Raumtemperatur erfolgt. Es wird die höchste stabile Schichtdicke, bei der kein Ablaufen beobachtet wird, als Ablaufgrenze in μm angegeben. Die Ergebnisse sind in Tabelle 7 dargestellt.

Die Zusammensetzungen VZ11, VZ12, Z30 und Z32-Z37 enthalten Aerosil 200 als Thixotropiermittel (B) und die Zusammensetzung Z31 enthält Aerosil R972 als Thixotropiermittel (B).

Tabelle 7:

| Beispiel/Vergleichsbeispiel | Kondensationsprodukt (A) | Menge (A), jeweils bezogen auf das Gesamtgewicht des Thixotropiermittels (B) [Gew.-%] | Menge (B), jeweils bezogen auf das Gesamtgewicht des Bindemittels (C) [Gew.-%] | Ablaufgrenze [μm] |
|---|---|---|---|---|
| VZ12 | - | - | 1 | 100 |

(fortgesetzt)

| Beispiel/Vergleichsbeispiel | Kondensationsprodukt (A) | Menge (A), jeweils bezogen auf das Gesamtgewicht des Thixotropiermittels (B) [Gew.-%] | Menge (B), jeweils bezogen auf das Gesamtgewicht des Bindemittels (C) [Gew.-%] | Ablaufgrenze [μm] |
|---|---|---|---|---|
| VZ11 | V1* | 66 | 1 | < 550 |
| Z30 | K1 | 66 | 1 | 700 |
| Z31 | K1 | 66 | 1 | > 1000 |
| Z32 | K3 | 66 | 1 | 750 |
| Z33 | K4 | 66 | 1 | 950 |
| Z34 | K13 | 66 | 1 | 650 |
| Z35 | K16 | 66 | 1 | 800 |
| Z36 | K17 | 66 | 1 | 750 |
| Z37 | K24 | 66 | 1 | 600 |
| *V1: als Vergleichsbeispiel V1 wurde Beispielverbindung 8 aus DE 3706860 A1 eingesetzt | | | | |

***2.6*** *Zusammensetzungen enthaltend wenigstens ein Polyurethan-basiertes Harz als Bindemittel (C)*

Zur Herstellung des Bindemittels (C) werden 50 Anteile Setathone 1150 (verzweigtes Polyester/Polyether-Polyol, OH-Zahl 4,7 der Firma Nuplex) vorgelegt. Danach erfolgt die Zugabe von 2,25 Teilen Aerosil 200 als Thixotropiermittel (B). Die Mischung wird 15 Minuten im Dispermaten CV (Zahnscheibe 4 cm, 8000 U/Min) im System dispergiert.

Zu dieser Mischung wird im Anschluss ein Kondensationsprodukt (A) zur Herstellung einer erfindungsgemäßen Zusammensetzung Z38 bis Z44 oder eine aus DE 37 06 860 A1 bekannte Verbindung V1 (darin als Beispiel 8 offenbart) zur Herstellung einer Vergleichszusammensetzung VZ13 (siehe Tabelle 8) zugegeben und jeweils 1 Minute mit dem Dispermaten CV, Zahnscheibe 2 cm, 1500 U/Min eingearbeitet. Zudem wird eine entsprechende Zusammensetzung ohne Zusatz einer weiteren Komponente hergestellt (Vergleichszusammensetzung VZ14).

Nach Abkühlung der hergestellten Zusammensetzungen auf Raumtemperatur werden 50 g der so hergestellten Zusammensetzung mit 21,1 g des Härters Desmodur VL (Aromatisches Polyisocyanat auf Basis Diphenylmethandiisocyanat, 31,5% NCO-Gehalt, Firma Bayer) versetzt und 60 Sekunden homogenisiert.

Für die Zusammensetzungen Z38 bis Z44 und VZ13 bis VZ14 wird nach der vorstehend beschrieben Methode ihr Ablaufverhalten ermittelt bzw. die Ablaufgrenze bestimmt, wobei die Aushärtung bei Raumtemperatur erfolgt. Es wird die höchste stabile Schichtdicke, bei der kein Ablaufen beobachtet wird, als Ablaufgrenze in μm angegeben. Die Ergebnisse sind in Tabelle 8 dargestellt.

Tabelle 8:

| Beispiel/Vergleichsbeispiel | Kondensationsprodukt (A) | Menge (A), jeweils bezogen auf das Gesamtgewicht des Thixotropiermittels (B) [Gew.-%] | Menge (B), jeweils bezogen auf das Gesamtgewicht des Bindemittels (C) [Gew.-%] | Ablaufgrenze [μm] |
|---|---|---|---|---|
| VZ14 | - | - | 4,5 | <550 |
| VZ13 | V1* | 40 | 4,5 | 650 |
| Z38 | K1 | 40 | 4,5 | 850 |
| Z39 | K3 | 40 | 4,5 | 900 |
| Z40 | K4 | 40 | 4,5 | 750 |
| Z41 | K13 | 40 | 4,5 | 850 |

(fortgesetzt)

| Beispiel/Vergleichsbeispiel | Kondensationsprodukt (A) | Menge (A), jeweils bezogen auf das Gesamtgewicht des Thixotropiermittels (B) [Gew.-%] | Menge (B), jeweils bezogen auf das Gesamtgewicht des Bindemittels (C) [Gew.-%] | Ablaufgrenze [μm] |
|---|---|---|---|---|
| Z42 | K16 | 40 | 4,5 | 800 |
| Z43 | K17 | 40 | 4,5 | > 1000 |
| Z44 | K24 | 40 | 4,5 | 950 |
| *V1: als Vergleichsbeispiel V1 wurde Beispielverbindung 8 aus DE 3706860 A1 eingesetzt | | | | |

***2.7** Vergleichsbeispiel: Zusammensetzung enthaltend wenigstens ein Epoxid-basiertes Harz als Bindemittel (C)*

Dieses Vergleichsbeispiel (VZ15) enthält ein erfindungsgemäß eingesetztes Kondensationsprodukt (A), jedoch kein Thixotropiermittel (B) (nicht erfindungsgemäß)

Zur Herstellung des Bindemittels (C) werden 99,5 Anteile flüssiges Epoxidharzblend (RIM R 1335: modifiziertes Bisphenol-A-Harz, Molekulargewicht > 700 g/mol, Epoxidwert: 5,6 mol/kg, der Firma Momentive) mit 0,5 Anteilen BYK-A 530 (Entlüfter, Firma BYK-Chemie) versetzt und mittels Dispermaten CV (Zahnscheibe 2 cm, 1500 U/Min) 2 Minuten eingearbeitet (Komponente M1).

100 Anteile eines Amin-Härterblends als Härter (D) (CeTePox 1393-02H (Mischung aus Isophorondiamin, m-Xylylendiamin, Benzyalkohol, Salicylsäure und Nonylphenol, H-Äquivalent 93, der Firma CTP GmbH) werden in einem Mischbehälter vorgelegt. Zu dieser Mischung wird im Anschluss als Kondensationsprodukt (A) die Verbindung K5 (0,2 Anteile) zugegeben und 2 Minuten mit dem Dispermaten CV, Zahnscheibe 2 cm, 1500 U/Min eingearbeitet (Komponente M2).

Zudem wird eine weitere entsprechende Vergleichszusammensetzung (VZ16) ohne Zusatz von K5 hergestellt, d.h. eine Vergleichszusammensetzung, die weder (A) noch (B) enthält.

100 Teile der Komponente M1 werden jeweils mit 50 Teilen der Komponente M2 in einem Becher 1 Minute gut miteinander vermischt. Die Materialien werden appliziert und das Ablaufverhalten wird bestimmt.

Die festgestellte Ablaufgrenze für beide Zusammensetzungen VZ15 und VZ16 beträgt jeweils < 550 μm. Es werden keine Unterschiede in den thixotropen Eigenschaften dieser Vergleichszusammensetzungen festgestellt. Die Ergebnisse sind in Tabelle 9 dargestellt.

Tabelle 9:

| Vergleichsbeispiel | Kondensationsprodukt (A) | Thixotropiermittel (B) | Ablaufgrenze [μm] |
|---|---|---|---|
| VZ15 | K5 | - | <550 |
| VZ16 | - | - | <550 |

**Patentansprüche**

1. Eine Verwendung wenigstens eines Kondensationsprodukts (A) in Form der freien Verbindung oder in Form eines Salzes wenigstens einer Säure, welches erhältlich ist durch Umsetzung

    (a1) wenigstens einer polymerisierten Fettsäure oder wenigstens eines Umsetzungsprodukts (U) von wenigstens zwei polymerisierten Fettsäuren und wenigstens einem wenigstens zwei primäre Amino-Gruppen aufweisenden Polyamin, mit
    (a2) wenigstens einem zur Ausbildung wenigstens einer Imidazolin- und/oder Tetrahydropyrimidin-Einheit befähigten Polyalkylenpolyamin, welches wenigstens zwei primäre Amino-Gruppen oder wenigstens eine primäre und wenigstens eine sekundäre Amino-Gruppe aufweist,

    als Thixotropie-verstärkendes Additiv.

2. Die Verwendung gemäß Anspruch 1, **dadurch gekennzeichnet, dass** das Kondensationsprodukt (A) einen Gehalt an tertiärem Stickstoff im Bereich von 0,5 bis 20 Gew.-%, bezogen auf das Gesamtgewicht des Kondensationsprodukts (A), aufweist.

3. Die Verwendung gemäß Anspruch 1 oder 2, **dadurch gekennzeichnet, dass** das Kondensationsprodukt (A) eine Amin-Zahl im Bereich von 200 bis 1000 aufweist.

4. Die Verwendung gemäß einem der vorstehenden Ansprüche, **dadurch gekennzeichnet, dass** zur Herstellung des Kondensationsprodukts (A) pro Carbonsäure-Gruppe der als Komponente (a1) eingesetzten polymerisierten Fettsäure oder des als Komponente (a1) eingesetzten Umsetzungsprodukts (U) wenigstens 0,9 Mol an Polyalkylenpolyamin eingesetzt werden.

5. Die Verwendung gemäß einem der vorstehenden Ansprüche, **dadurch gekennzeichnet, dass** zur Herstellung der als Komponente (a1) eingesetzten polymerisierten Fettsäure oder des als Komponente (a1) eingesetzten Umsetzungsprodukts (U) wenigstens eine wenigstens einfach ungesättigte aliphatische $C_{16}$-$C_{20}$-Monocarbonsäure eingesetzt wird.

6. Die Verwendung gemäß einem der vorstehenden Ansprüche, **dadurch gekennzeichnet, dass** zur Herstellung des Kondensationsprodukts (A) als Komponente (a1) wenigstens eine trimerisierte Fettsäure, wenigstens eine dimerisierte Fettsäure, ein Gemisch polymerisierter Fettsäuren, welches wenigstens eine trimerisierte und wenigstens eine dimerisierte Fettsäure enthält, oder ein Umsetzungsprodukt (U) von wenigstens zwei polymerisierten Fettsäuren ausgewählt aus der Gruppe bestehend aus dimerisierten und trimerisierten Fettsäuren und Mischungen davon, und wenigstens einem wenigstens zwei primäre Amino-Gruppen aufweisenden Polyamin, eingesetzt wird.

7. Die Verwendung gemäß einem der vorstehenden Ansprüche, **dadurch gekennzeichnet, dass** zur Herstellung des Kondensationsprodukts (A) als Komponente (a1) ein Gemisch polymerisierter Fettsäuren, welches wenigstens eine trimerisierte und wenigstens eine dimerisierte Fettsäure enthält, eingesetzt wird, wobei das Gemisch einen Anteil von wenigstens 70 Gew.-% an wenigstens einer trimerisierten Fettsäure und einen Anteil von höchstens 30 Gew.-% an wenigstens einer dimerisierten Fettsäure, oder einen Anteil von wenigstens 70 Gew.-% an wenigstens einer dimerisierten Fettsäure und einen Anteil von höchstens 30 Gew.-% an wenigstens einer trimerisierten Fettsäure, jeweils bezogen auf das Gesamtgewicht des Gemisches, aufweist, oder ein Umsetzungsprodukt (U) von wenigstens zwei polymerisierter Fettsäuren ausgewählt aus der Gruppe bestehend aus dimerisierten und trimerisierten Fettsäuren und Mischungen davon, und wenigstens einem wenigstens zwei primäre Amino-Gruppen aufweisenden Polyamin, eingesetzt wird.

8. Die Verwendung gemäß einem der vorstehenden Ansprüche, **dadurch gekennzeichnet, dass** das als Komponente (a2) eingesetzte Polyalkylenpolyamin ein Polyalkylenpolyamin der allgemeinen Formel (I) ist

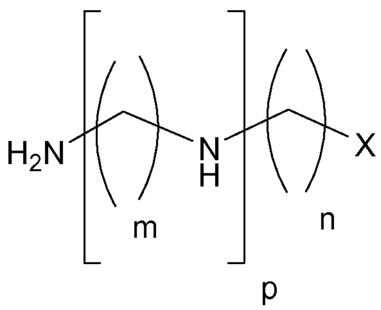

(I),

worin

m für 2 oder 3 steht,
n für 0, 1, 2, 3 oder 4 steht,
p für 1, 2, 3, 4 oder 5 steht, und
X für H steht, wenn n 0 bedeutet oder
X für $NH_2$ oder OH steht, wenn n für 1, 2, 3 oder 4 steht.

**9.** Die Verwendung gemäß einem der vorstehenden Ansprüche, **dadurch gekennzeichnet, dass** das Kondensationsprodukt (A) ein Kondensationsprodukt der allgemeinen Formel (II) ist

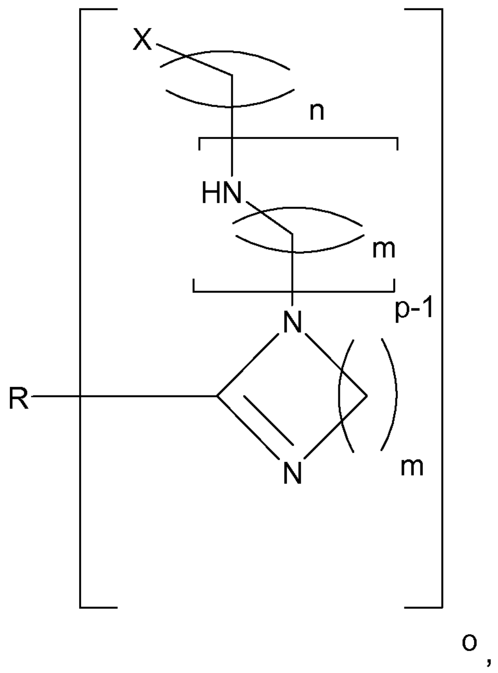

(II),

worin

m für 2 oder 3 steht,
n für 0, 1, 2, 3 oder 4 steht,
p für 1, 2, 3 oder 4 steht,
X für H steht, wenn n 0 bedeutet oder
X für $NH_2$ oder OH steht, wenn n für 1, 2, 3 oder 4 steht,
o für 2, 3, 4, 5 oder 6 steht, und
R für einen $C_{30}$-$C_{95}$-aliphatischen Rest steht, der gegebenenfalls wenigstens einfach ungesättigt sein kann, oder

R für einen Rest der allgemeinen Formel (III) steht

($C_{30}$-$C_{95}$-aliphatischer Rest)-C(=O)-NH-Z-NH-C(=O)-($C_{30}$-$C_{95}$-aliphatischer Rest) (III),

worin

Z ausgewählt ist aus der Gruppe bestehend aus -$C_{1-10}$-Alkylen-, -(Hetero)cycloaliphat-, -Aryl-, -Heteroaryl-, -$C_{1-10}$-Alkylen-(Hetero)cycloaliphat-$C_{1-10}$-Alkylen-, -$C_{1-10}$-Alkylen-Aryl- $C_{1-10}$-Alkylen- und -$C_{1-10}$-Alkylen-Heteroaryl- $C_{1-10}$-Alkylen-,
und
wobei der $C_{30}$-$C_{95}$-aliphatische Rest in Formel (III) gegebenenfalls jeweils wenigstens einfach ungesättigt sein kann.

**10.** Eine Zusammensetzung umfassend

(A) wenigstens ein Kondensationsprodukt in Form der freien Verbindung oder in Form eines Salzes wenigstens einer Säure als Thixotropie-verstärkendes Additiv, welches erhältlich ist durch Umsetzung

(a1) wenigstens einer polymerisierten Fettsäure oder wenigstens eines Umsetzungsprodukts (U) von wenigstens zwei polymerisierten Fettsäuren und wenigstens einem wenigstens zwei primäre Amino-Gruppen aufweisenden Polyamin,
mit
(a2) wenigstens einem zur Ausbildung wenigstens einer Imidazolin- und/oder Tetrahydropyrimidin-Einheit befähigten Polyalkylenpolyamin, welches wenigstens zwei primäre Amino-Gruppen oder wenigstens eine primäre und wenigstens eine sekundäre Amino-Gruppe aufweist,
und

(B) wenigstens ein Thixotropiermittel.

11. Die Zusammensetzung gemäß Anspruch 10, **dadurch gekennzeichnet, dass** das Thixotropiermittel (B) ausgewählt ist aus der Gruppe bestehend aus nichtorganisch modifizierter pyrogener Kieselsäure, hydrophob modifizierter pyrogener Kieselsäure und Mischungen davon.

12. Die Zusammensetzung gemäß Anspruch 10 oder 11, **dadurch gekennzeichnet, dass** die Zusammensetzung

(C) wenigstens ein Bindemittel und
(D) gegebenenfalls wenigstens einen Härter umfasst.

13. Die Zusammensetzung gemäß Anspruch 12, **dadurch gekennzeichnet, dass** das Bindemittel (C) ausgewählt ist aus der Gruppe bestehend aus Epoxidbasierten Harzen, Polyester-basierten Harzen, Vinylester-basierten Harzen, Poly(meth)acrylat-basierten Harzen, Harzen auf Basis wenigstens eines (Meth)acrylat-Copolymers und Polyurethan-basierten Harzen.

14. Die Zusammensetzung gemäß Anspruch 12 oder 13, **dadurch gekennzeichnet, dass** die Zusammensetzung das Thixotropiermittel (B) in einer Menge in einem Bereich von 0,5 bis 25 Gew.-%, bezogen auf das Gesamtgewicht des Bindemittels (C), und
das Thixotropie-verstärkende Additiv (A) in einer Menge in einem Bereich von 10 bis 100 Gew.-%, bezogen auf das Gesamtgewicht des Thixotropiermittels (B), enthält.

15. Eine Verwendung der Zusammensetzung gemäß einem der Ansprüche 12 bis 14 als Klebstoff, Dichtstoff, Lack, Beschichtungsmittel, Klebeharz, Gießharz, Kunstmarmor, Fußbodenbelag, Polymerbeton oder Faserverbundmaterial.

## Claims

1. Use of at least one condensation product (A) in the form of the free compound or in the form of a salt of at least one acid, the product being obtainable by reaction of

(a1) at least one polymerised fatty acid or at least one reaction product (U) of at least two polymerised fatty acids and at least one polyamine having at least two primary amino groups,
with
(a2) at least one polyalkylene polyamine that is able to form at least one imidazoline and/or tetrahydropyrimidine unit and has at least two primary amino groups or at least one primary and at least one secondary amino group,

as a thixotropy-increasing additive.

2. Use according to claim 1, **characterised in that** the condensation product has a content of tertiary nitrogen in the range of from 0.5 to 20 % by weight based on the total weight of the condensation product (A).

3. Use according to claim 1 or 2, **characterised in that** the condensation product (A) has an amine number in the range of from 200 to 1000.

4. Use according to any one of the preceding claims, **characterised in that** for each carboxylic acid group of the polymerised fatty acid used as component (a1) or of the reaction product (U) used as component (a1), at least 0.9 mol of polyalkylene polyamine are used for the production of the condensation product (A).

**5.** Use according to any one of the preceding claims, **characterised in that** for the production of the polymerised fatty acid used as component (a1) or of the reaction product (U) used as component (a1) at least one at least monounsaturated aliphatic $C_{16}$-$C_{20}$ monocarboxylic acid is used.

**6.** Use according to any one of the preceding claims, **characterised in that,** for the preparation of the condensation product (A), at least one trimerised fatty acid, at least one dimerised fatty acid, a mixture of polymerised fatty acids comprising at least one trimerised and at least one dimerised fatty acid, or a reaction product (U) of at least two polymerised fatty acids selected from the group consisting of dimerised and trimerised fatty acids and mixtures thereof, and at least one polyamine having at least two primary amino groups, is used as component (a1).

**7.** Use according to any one of the preceding claims, **characterised in that,** for the preparation of the condensation product (A), a mixture of polymerised fatty acids comprising at least one trimerised and at least one dimerised fatty acid, is used as the component (a1), the mixture having a fraction of at least 70 % by weight of at least one trimerised fatty acid and a fraction of at most 30 % by weight of at least one dimerised fatty acid, or a fraction of at least 70 % by weight of at least one dimerised fatty acid and a fraction of at most 30 % by weight of at least one trimerised fatty acid, in each case based on the total weight of the mixture, or a reaction product (U) of at least two polymerised fatty acids selected from the group consisting of dimerised and trimerised fatty acids and mixtures thereof, and at least one polyamine having at least two primary amino groups being used.

**8.** Use according to any one of the preceding claims, **characterised in that** the polyalkylenepolyamine used as component (a2) is a polyalkylenepolyamine of the general formula (I)

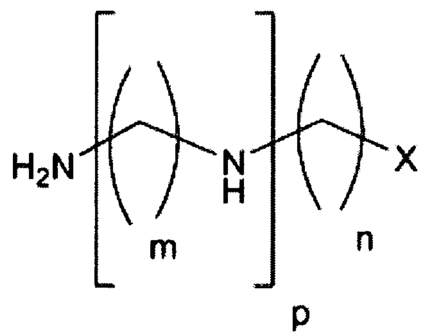

(I),

in which

m is 2 or 3,
n is 0, 1, 2, 3 or 4,
p is 1, 2, 3, 4 or 5, and
X is H if n is , or

X is $NH_2$ or OH if n is 1, 2, 3 or 4.

**9.** Use according to any one of the preceding claims, **characterised in that** the condensation product (A) is a condensation product of the general formula (II)

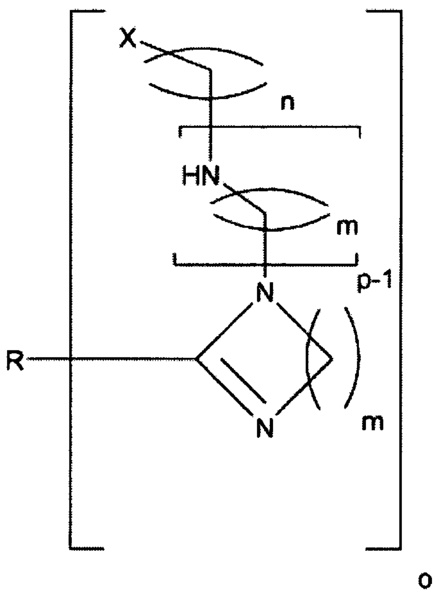

(II),

in which

m is 2 or 3,
n is 0, 1, 2, 3 or 4,
p is 1, 2, 3 or 4,
X is H if n is 0, or
X is $NH_2$ or OH if n is 1, 2, 3 or 4,
o is 2, 3, 4, 5 or 6, and
R is a $C_{30}$-$C_{95}$ aliphatic radical which may optionally be at least monounsaturated, or

R is a radical of the general formula (III)

$$(C_{30}\text{-}C_{95}\text{-aliphatic radical})\text{-}C(=O)\text{-}NH\text{-}Z\text{-}NH\text{-}C(=O)\text{-}(C_{30}\text{-}C_{95}\text{-aliphatic radical}) \quad \text{(III)},$$

in which

Z is selected from the group consisting of -$C_{1-10}$ alkylene-, - (hetero)cycloaliphatic-, -aryl-, -heteroaryl-, -$C_{1-10}$ alkylene-(hetero)cycloaliphatic-$C_{1-10}$ alkylene-, -$C_{1-10}$ alkylene-aryl-$C_{1-10}$ alkylene-, and -$C_{1-10}$ alkylene-heteroaryl-$C_{1-10}$ alkylene-,
and
where the $C_{30}$-$C_{95}$ aliphatic radical in formula (III) may in each case be optionally at least monounsaturated.

**10.** A composition comprising

(A) at least one condensation product in the form of the free compound or in the form of a salt of at least one acid as a thixotropy-increasing additive, the product being obtainable by reaction of

(a1) at least one polymerised fatty acid or at least one reaction product (U) of at least two polymerised fatty acids and at least one polyamine having at least two primary amino groups,
with
(a2) at least one polyalkylene polyamine that is able to form at least one imidazoline and/or tetrahydropyrimidine unit and has at least two primary amino groups or at least one primary and at least one secondary amino group,
and

(B) at least one thixotropic agent.

**11.** Composition according to claim 10, **characterised in that** the thixotropic agent (B) is selected from the group consisting of non-organically modified fumed silica, hydrophobically modified fumed silica, and mixtures thereof.

**12.** Composition according to claim 10, **characterised in that** the composition comprises

(C) at least one binder and
(D) optionally at least one curing agent.

**13.** Composition according to claim 12, **characterised in that** the binder (C) is selected from the group consisting of epoxide-based resins, polyester-based resins, vinyl ester-based resins, poly(meth)acrylate-based resins, resins based on at least one (meth)acrylate copolymer, and polyurethane-based resins.

**14.** Composition according to claim 12 or 13, **characterised in that** the composition contains
the thixotropic agent (B) in an amount in the range from 0.5 to 25 % by weight, based on the total weight of the binder (C), and
the thixotropy-increasing additive (A) in an amount in a range from 10 to 100 % by weight, based on the total weight of the thixotropic agent (B).

**15.** Use of the composition according to any one of claims 12 to 14 as an adhesive, sealant, paint, coating material, adhesive resin, casting resin, synthetic marble, floor covering, polymer concrete, or fiber composite material.

**Revendications**

**1.** Utilisation d'au moins un produit de condensation (A) sous forme de composé libre ou sous forme d'un sel d'au moins un acide, le produit de condensation étant obtenable par réaction

(a1) d'au moins un acide gras polymérisé ou d'au moins un produit de réaction (U) d'au moins deux acides gras polymérisés et au moins une polyamine ayant au moins deux groupes amino primaires,
avec
(a2) au moins une polyalkylènepolyamine adaptée à former une unité d'imidazoline et/ou tétrahydropyrimidine et ayant au moins deux groupes amino primaires ou respectivement au moins une groupe amino primaire et secondaire,

en tant qu'additif renforçant la thixotropie.

**2.** Utilisation selon la revendication 1, **caractérisée en ce que** le produit de condensation (A) présente une teneur en azote tertiaire dans la plage de 0,5 à 20 % en poids par rapport au poids total du produit de condensation (A).

**3.** Utilisation selon la revendication 1 ou 2, **caractérisée en ce que** le produit de condensation (A) présente un indice d'amine dans la plage de 200 à 1000.

**4.** Utilisation selon l'une quelconque des revendications précédentes, **caractérisée en ce que**, par chaque groupe d'acide carboxylique de l'acide gras polymérisé utilisé comme composant (a1) ou du produit de réaction (U) utilisé comme composant (a1), au moins 0,9 moles de polyalkylènepolyamine sont utilisées pour la préparation du produit de condensation (A).

**5.** Utilisation selon l'une quelconque des revendications précédentes, **caractérisée en ce qu**'au moins un acide monocarboxylique aliphatique en $C_{16}$-$C_{20}$ au moins mono-insaturé est utilisé pour la préparation de l'acide gras polymérisé utilisé comme composant (a1) ou du produit de réaction (U) utilisé comme composant (a1).

**6.** Utilisation selon l'une quelconque des revendications précédentes, **caractérisée en ce qu'**au moins un acide gras trimérisé, au moins un acide gras dimérisé, un mélange des acides gras polymérisés contenant respectivement au moins un acide gras trimérisé et dimérisé, ou un produit de réaction (U) d'au moins deux acides gras polymérisés choisi dans le groupe consistant en acides gras dimérisés et trimérisés ou mélanges de ceux-ci, et au moins une polyamine ayant au moins deux groupes amino primaires, sont utilisés pour la préparation du produit de condensation (A) comme composant (a1).

**7.** Utilisation selon l'une quelconque des revendications précédentes, **caractérisée en ce qu**'un mélange des acides gras polymérisés contenant respectivement au moins un acide gras trimérisé et dimérisé est utilisé pour la préparation du produit de condensation (A) comme composant (a1), le mélange ayant une proportion d'au moins 70 % en poids d'au moins un acide gras trimérisé, et une proportion d'au maximum 30 % en poids d'au moins un acide gras dimérisé, ou une proportion d'au moins 70 % en poids d'au moins un acide gras dimérisé et une proportion d'au maximum 30 % en poids d'au moins un acide gras trimérisé, respectivement par rapport au poids total du mélange, ou un produit de réaction (U) d'au moins deux acides gras polymérisés choisis dans le groupe consistant en acides gras dimérisés et trimérisés et mélanges de ceux-ci, avec au moins une polyamine ayant au moins deux groupes amino primaires, étant utilisé.

**8.** Utilisation selon l'une quelconque des revendications précédentes, **caractérisée en ce que** la polyalkylènepolyamine utilisé comme composant (a2) est une polyalkylènepolyamine de la formule générale (I)

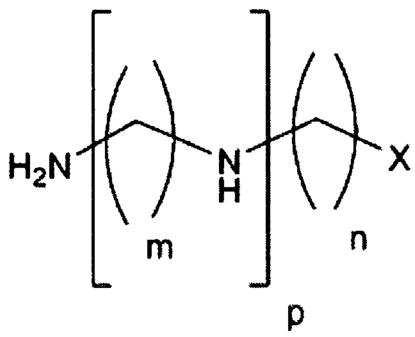

(I),

où

m représente 2 ou 3,
n représente 0, 1, 2, 3 ou 4,
p représente 1, 2, 3, 4 ou 5, et
X représente H, lorsque n est 0, ou

X représente $NH_2$ ou OH, lorsque n représente 1, 2, 3 ou 4.

**9.** Utilisation selon l'une quelconque des revendications précédentes, **caractérisée en ce que** le produit de condensation (A) est un produit de condensation de la formule générale (II)

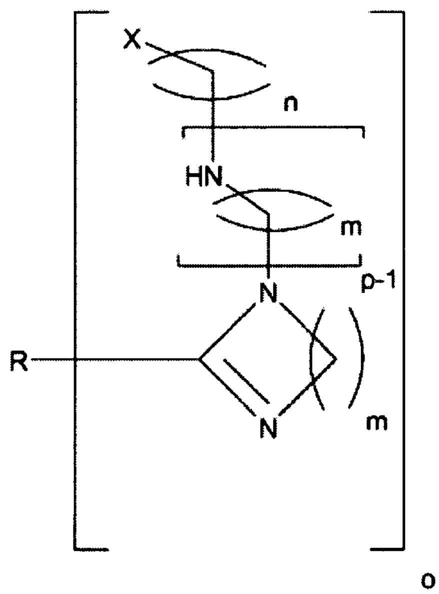

(II),

où

m représente 2 ou 3,
n représente 0, 1, 2, 3 ou 4,
p représente 1, 2, 3 ou 4,
X représente H, lorsque n est 0, ou
X représente $NH_2$ ou OH, lorsque n représente 1, 2, 3 ou 4,
o représente 2, 3, 4, 5 ou 6, et
R représente un groupement aliphatique en $C_{30}$-$C_{95}$, qui peut être, le cas échéant, au moins mono-insaturé, ou

R représente un groupement de la formule générale (III)

($C_{30}$-$C_{95}$-radical aliphatique)-C(=O)-NH-Z-NH-C(=O)-($C_{30}$-$C_{95}$-radical aliphatique) (III),

où

Z est choisi dans le groupe consistant en -($C_{1-10}$-alkylène-,-(hétéro)cycloaliphatique-, -aryle-, -hétéroaryle-, -$C_{1-10}$-alkylène-(hétéro)cycloaliphatique- $C_{1-10}$-alkylène-, -$C_{1-10}$-alkylène-aryle- $C_{1-10}$-alkylène- et -$C_{1-10}$-alkylène-hétéroaryle- $C_{1-10}$-alkylène-,
et
où le groupement aliphatique en $C_{30}$-$C_{95}$ dans la formule (III) respectivement peut être, le cas échéant, au moins mono-insaturé.

**10.** Composition comportant

(A) au moins un produit de condensation sous forme de composé libre ou sous forme d'un sel d'au moins un acide en tant qu'additif renforçant la thixotropie, le produit de condensation étant obtenable par réaction

(a1) d'au moins un acide gras polymérisé ou d'au moins un produit de réaction (U) d'au moins deux acides gras polymérisés et au moins une polyamine ayant au moins deux groupes amino primaires,
avec
(a2) au moins une polyalkylènepolyamine adaptée à former une unité d'imidazoline et/ou tétrahydropyrimidine et ayant au moins deux groupes amino primaires ou respectivement au moins une groupe amino primaire et secondaire,
et

(B) au moins un agent thixotrope.

**11.** Composition selon la revendication 10, **caractérisée en ce que** l'agent thixotrope (B) est choisi dans le groupe consistant en acide silicique pyrogéné et modifié par composés non-organiques, acide silicique pyrogéné et modifié de manière hydrophobe, ou des mélanges de ceux-ci.

**12.** Composition selon la revendication 10 ou 11, **caractérisée en ce que** la composition comporte

(C) au moins un liant et
(D) le cas échéant au moins un durcisseur.

**13.** Composition selon la revendication 12, **caractérisée en ce que** le liant (C) est choisi dans le groupe consistant en résines à base d'époxy, résines à base de polyester, résines à base de vinylester, résines à base de poly(méth)acrylate, résines à base d'au moins un copolymère de (méth)acrylate et résines à base de polyuréthane.

**14.** Composition selon la revendication 12 ou 13, **caractérisée en ce que** ladite composition contient l'agent thixotrope (B) en une quantité dans une plage de 0,5 à 25 % en poids, par rapport au poids total du liant (C), et l'additif renforçant la thixotropie (A) en une quantité dans une plage de 10 à 100 % en poids, par rapport au poids total de l'agent thixotrope (B).

**15.** Utilisation de la composition selon l'une quelconque des revendications 12 à 14 en tant qu'agent adhésif, mastic,

peinture, agent de revêtement, résine adhésive, résine de coulée, marbre artificiel, revêtement de sol, béton de polymère ou matériau composite fibreux.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3706860 A1
- WO 9923177 A1
- EP 0835910 A1
- DE 2654871 A1
- EP 0084111 A1
- EP 0098372 A1
- EP 0003246 A1
- EP 1865013 A1
- US 20120237774 A1
- DE 2506211 A1
- US 2793219 A
- US 2955121 A
- EP 0893155 A2
- EP 0417490 A2
- US 5143952 A


### In der Beschreibung aufgeführte Nicht-Patentliteratur


- **LACKE ; DRUCKFARBEN.** Römpp Lexikon. Georg Thieme Verlag, 1998
- Römpp Chemie-Lexikon. Georg Thieme Verlag, 1992
- **H. HEIN et al.** *Fette, Seifen, Anstrichmittel,* 1978, vol. 80, 448
- **BODO MÜLLER.** Additive kompakt. Vincentz Verlag, 2009, 35, , 36
- *CHEMICAL ABSTRACTS,* 112-24-3
- *CHEMICAL ABSTRACTS,* 111-40-0
- *CHEMICAL ABSTRACTS,* 112-57-2
- *CHEMICAL ABSTRACTS,* 4067-16-7
- *CHEMICAL ABSTRACTS,* 109-76-2
- *CHEMICAL ABSTRACTS,* 56-18-8
- *CHEMICAL ABSTRACTS,* 1965-29-3